(19) Europäisches Patentamt / European Patent Office / Office européen des brevets

(11) **EP 3 269 067 B1**

(12) **EUROPEAN PATENT SPECIFICATION**

(45) Date of publication and mention
of the grant of the patent:
**07.08.2019 Bulletin 2019/32**

(21) Application number: **15790077.0**

(22) Date of filing: **29.10.2015**

(51) Int Cl.:
**H04L 5/00** *(2006.01)*

(86) International application number:
**PCT/EP2015/075157**

(87) International publication number:
**WO 2016/142006 (15.09.2016 Gazette 2016/37)**

(54) **REDUCING REFERENCE SIGNALS WHEN COMMUNICATING MULTIPLE SUB-SUBFRAMES BETWEEN A BASE STATION AND A WIRELESS TERMINAL**

REDUZIERUNG VON REFERENZSIGNALEN WÄHREND DER ÜBERTRAGUNG MEHRERER SUB-SUBFRAMES ZWISCHEN EINER BASISSTATION UND EINEM DRAHTLOSEN ENDGERÄT

RÉDUCTION DE SIGNAUX DE RÉFÉRENCE LORS D'UNE COMMUNICATION DE MULTIPLES SOUS-SOUS-TRAMES ENTRE UNE STATION DE BASE ET UN TERMINAL SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.03.2015 US 201562130200 P
09.03.2015 US 201562130312 P
09.03.2015 US 201562130127 P**

(43) Date of publication of application:
**17.01.2018 Bulletin 2018/03**

(73) Proprietor: **Telefonaktiebolaget LM Ericsson (publ)
164 83 Stockholm (SE)**

(72) Inventors:
• **ANDERSSON, Mattias
172 39 Sundbyberg (SE)**
• **ANDGART, Niklas
247 33 Södra Sandby (SE)**
• **MAATTANEN, Helka-Liina
00510 Helsinki (FI)**

(74) Representative: **Zacco Sweden AB
P.O. Box 5581
114 85 Stockholm (SE)**

(56) References cited:
**WO-A1-2014/110467 WO-A2-2006/105005
US-A1- 2014 064 238**

EP 3 269 067 B1

## Description

BACKGROUND

The present disclosure relates generally to wireless communications, and more particularly, to sub-frame structures for communications between base stations and wireless terminals.

Packet data latency is a performance metric that vendors, operators, and end-users regularly measure (e.g., via speed test applications). Latency measurements may be performed in all phases of a radio access network system lifetime, for example, when verifying a new software release or system component, when deploying a system, and/or when the system is in commercial operation.

Improved latency relative to previous generations of 3rd Generation Partnership Project (3GPP) Radio Access Technologies (RATs) was a performance metric that guided the design of Long Term Evolution (LTE). LTE is also now recognized by end-users to be a system that provides faster access to the Internet and lower data latencies than previous generations of mobile radio technologies.

Packet data latency may be important not only for perceived responsiveness of the system. Packet data latency may also be a parameter that indirectly influences throughput of the system. HTTP/TCP (Hypertext Transfer Protocol / Transmission Control Protocol) is the dominating application and transport layer protocol suite used on the Internet today. According to HTTP Archive (http://httparchive.org/trends.php) a typical size of HTTP based transactions over the Internet may be in the range of a few 10's of Kbyte up to 1 Mbyte. In this size range, the TCP slow start period may be a significant part of the total transport period of the packet stream. During TCP slow start, the performance may be latency limited. Hence, improved latency may be shown to improve average throughput, for this type of TCP based data transaction.

Radio resource efficiency may be positively impacted by latency reductions. Lower packet data latency may increase a number of transmissions possible within a certain delay bound. Accordingly, higher BLER (Block Error Rate) targets may be used for data transmissions freeing up radio resources and/or potentially improving capacity of the system.

There are a number of current applications that may be positively impacted by reduced latency in terms of increased perceived quality of experience. Examples of such applications may include gaming, real-time applications (e.g., VoLTE/OTT VoIP), and/or multi-party video conferencing.

Going into the future, there may new applications that will be more delay critical. Examples of such applications may include remote control/driving of vehicles, augmented reality applications (e.g., smart glasses), and/or specific machine communications requiring low latency.

It should also be noted that reduced latency of data transport may also indirectly provide faster radio control plane procedures (e.g., call set-up/bearer set-up), due to the faster transport of higher layer control signaling.

Accordingly, there continues to exist a need in the art for methods and/or systems providing further reductions in latency.

WO 2014/110467 A discloses systems, methods, and/or techniques for improving downlink spectrum efficiency. For example, a higher order modulation (HOM) transmission may be provided to a device. The higher order modulation transmission may be configured to be indicated by the network or a device. Additionally, multiple modulation and coding scheme (MCS) tables, transport block size (TBS) tables, and/or channel quality index (CQI) tables may be provided to support the higher order modulation transmission

SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention.

According to some embodiments, a method may be provided to operate a network node in a radio access network, RAN. A first sub-subframe of a subframe may be transmitted, wherein the first sub-subframe includes reference signals for a wireless terminal. After transmitting the first sub-subframe, a second sub-subframe of the subframe may be transmitted, wherein the second sub-subframe includes downlink data for the wireless terminal, and wherein the second sub-subframe is free of reference signals.

According to some other embodiments, a method may be provided to operate a wireless terminal in communication with a radio access network. A first sub-subframe of a subframe may be received from a base station, wherein the first sub-subframe includes reference signals for the wireless terminal. After receiving the first sub-subframe, a second sub-subframe of the subframe may be received from the base station, wherein the second sub-subframe includes downlink data for the wireless terminal, and wherein the second sub-subframe is free of reference signals.

According to still other embodiments, a network node of a radio access network (RAN) may include a communication interface configured to provide communication with one or more wireless terminals over a radio interface, and a processor coupled with the communication interface. The processor may be configured to transmit a first sub-subframe of a subframe, wherein the first sub-subframe includes reference signals for a wireless terminal. The processor may also be configured to transmit a second sub-subframe of the subframe after transmitting the first sub-subframe, wherein the second sub-subframe includes downlink data for the wireless terminal, and wherein the second sub-subframe is free of reference signals.

According to yet other embodiments, s network node of a radio access network (RAN) may be provided. More particularly, the network node may be adapted to transmit a first sub-subframe of a subframe, wherein the first sub-subframe includes reference signals for a wireless terminal. The network node may also be adapted to transmit a second sub-subframe of the subframe after transmitting the first sub-subframe, wherein the second sub-subframe includes downlink data for the wireless terminal, and wherein the second sub-subframe is free of reference signals.

According to more embodiments, a wireless terminal may include a transceiver configured to provide radio communication with a radio access network over a radio interface, and a processor coupled with the transceiver. More particularly, the processor may be configured to receive a first sub-subframe of a subframe from a base station, wherein the first sub-subframe includes reference signals for the wireless terminal. In addition, the processor may be configured to receive a second sub-subframe of the subframe from the base station after receiving the first sub-subframe, wherein the second sub-subframe includes downlink data for the wireless terminal, and wherein the second sub-subframe is free of reference signals.

According to additional embodiments, a wireless terminal may be adapted to receive a first sub-subframe of a subframe from a base station, wherein the first sub-subframe includes reference signals for the wireless terminal. The wireless terminal may also be adapted to receive a second sub-subframe of the subframe from the base station after receiving the first sub-subframe, wherein the second sub-subframe includes downlink data for the wireless terminal, and wherein the second sub-subframe is free of reference signals.

By providing reference signals in some sub-subframes for a wireless terminal but not others, reference signal overhead may be reduced thereby increasing an efficiency of radio resource usage.

BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:

Figure 1 is a block diagram illustrating base stations of a radio access network in communication with wireless terminals and a core network node according to some embodiments of inventive concepts;

Figure 2 is a block diagram of a base station of Figure 1 according to some embodiments of inventive concepts;

Figure 3 is a block diagram of a wireless terminal of Figure 1 according to some embodiments of inventive concepts;

Figure 4 is a block diagram of a core network node according to some embodiments of inventive concepts;

Figure 5 is a time-frequency diagram illustrating examples of scheduling sub-subframes of a subframe according to some embodiments of inventive concepts;

Figures 6-10, 11A, and 11B are a time-frequency diagrams illustrating examples of scheduling control channels and sub-subframes of multiple subframes according to some embodiments of inventive concepts;

Figure 12 is a signaling diagram illustrating control signaling timing for scheduling requests according to some embodiments of inventive concepts;

Figures 13 and 14 are a flow charts illustrating wireless terminal operations according to some embodiments of inventive concepts;

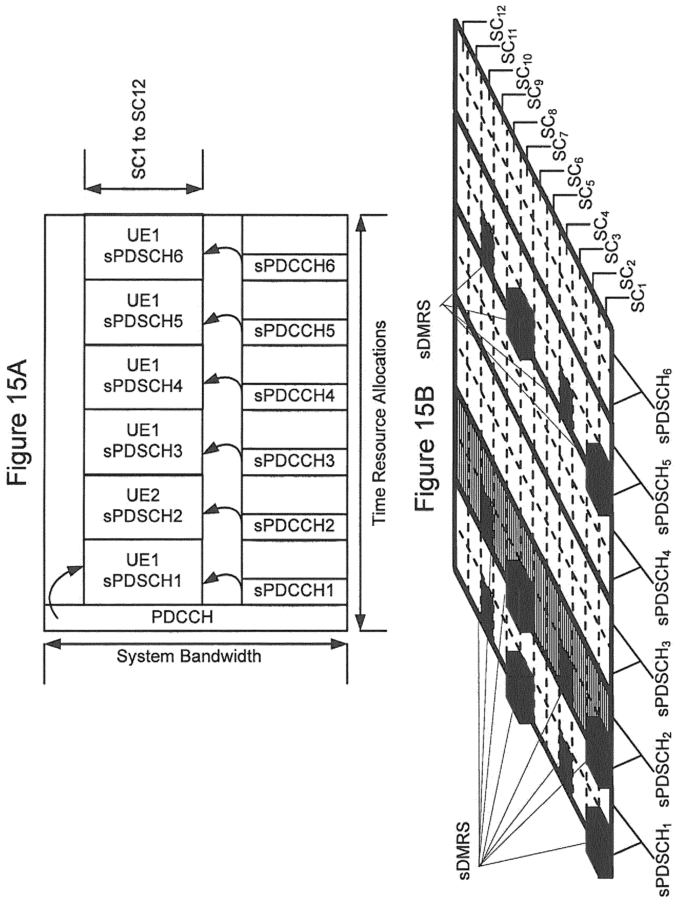

Figure Figure 15A is a time-frequency diagram illustrating examples of scheduling control channels and sub-subframes of a subframe according to some embodiments of inventive concepts;

Figure 15B is a time-frequency diagram illustrating examples of reference signal distributions in sub-subframes of Figure 15A according to some embodiments of inventive concepts;

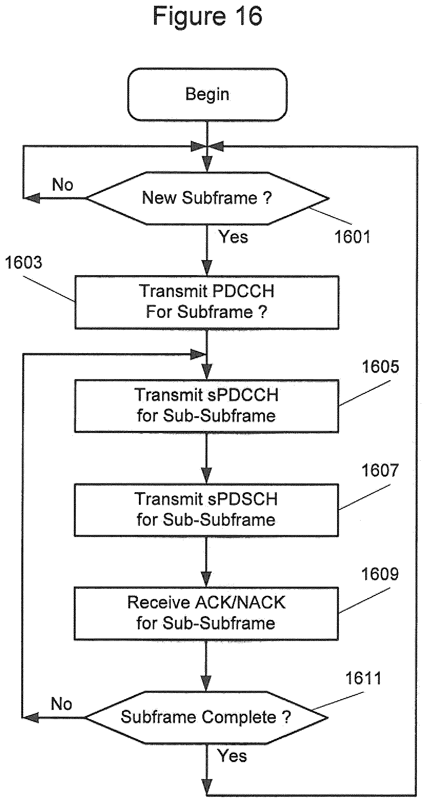

Figure 16 is a flow chart illustrating base station operations according to some embodiments of inventive concepts; and

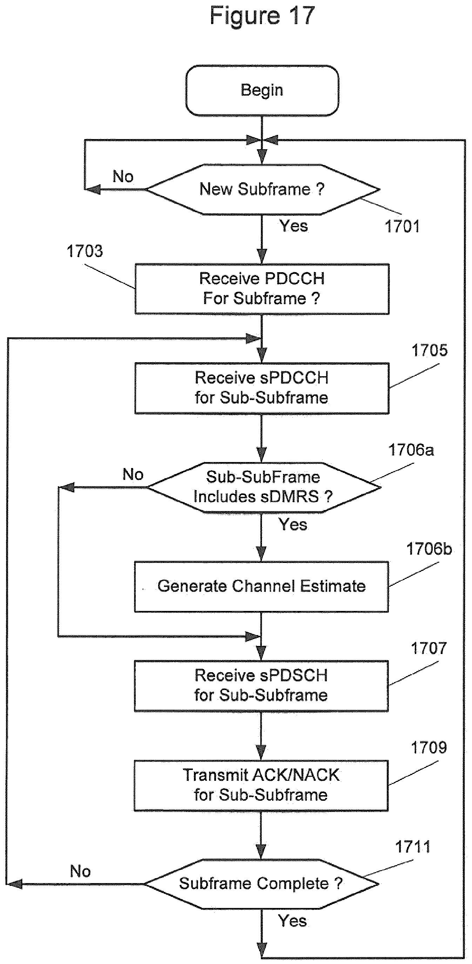

Figure 17 is a flow chart illustrating wireless terminal operations according to some embodiments of inventive concepts.

DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of inventive concepts to those skilled in the art. It should also be noted that these embodiments are not mutually exclusive. Components/elements from one embodiment may be tacitly assumed to be present/used in another embodiment.

For purposes of illustration and explanation only, these and other embodiments of inventive concepts are described herein in the context of operating in a RAN (Radio Access Network) that communicates over radio communication channels with wireless terminals (also referred to as UEs, user equipments, user equipment nodes, mobile terminals, wireless devices, etc.). It will be understood, however, that inventive concepts are not limited to such embodiments and may be embodied generally in any type of communication network. As used herein, a legacy or non-legacy wireless terminal (also referred to as a UE, user equipment, user equipment node, mobile terminal, wireless device, etc.) can include any device that receives data from and/or transmits data to a communication network, and may include, but is not limited to, a mobile telephone ("cellular" telephone), laptop/portable computer, pocket computer, hand-held computer, an M2M device, IoT (Internet of Things) device, and/or desktop computer.

Note that although terminology from 3GPP (3rd Generation Partnership Project) LTE (Long Term Evolution) has been used in this disclosure to provide examples of embodiments of inventive concepts, this should not be seen as limiting the scope of inventive concepts to only the aforementioned system. Other wireless systems, including WCDMA, WiMax, UMB and GSM, may also benefit from exploiting ideas/concepts covered within this disclosure.

Also, note that terminology such as eNodeB (also referred to as a base station, eNB, etc.) and UE (also referred to as user equipment, user equipment node, wireless terminal, mobile terminal, wireless device, etc.) should be considering non-limiting.

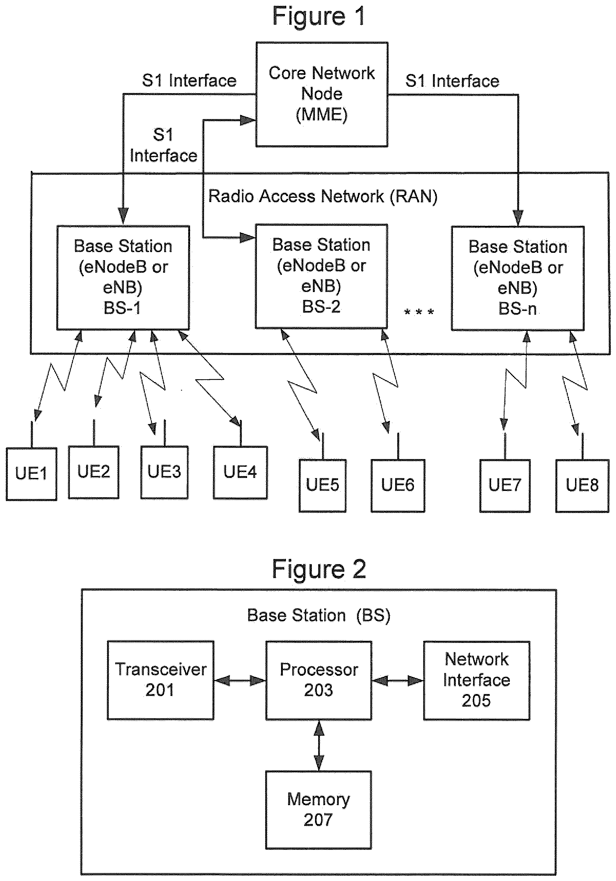

Figure 1 is a block diagram illustrating a Radio Access Network (RAN) according to some embodiments of present inventive concepts. As shown, communications between base stations and one or more core network nodes (e.g., Mobility Management Entity (MME) or Service GPRS Support Node SGSN) may be provided using respective S1 interfaces. Each base station BS may communicate over a radio interface (including uplinks and downlinks) with respective wireless terminals UEs in a respective cell or cells supported by the base station. By way of example, base station BS-1 is shown in communication with wireless terminals UE1, UE2, UE3, and UE4, base station BS-2 is shown in communication with wireless terminals UE5 and UE6, and base station BS-n is shown in communication with wireless terminals UE7 and UE8.

Figure 2 is a block diagram illustrating elements of a base station BS of Figure 1. As shown, a base station BS may include a transceiver circuit 201 (also referred to as a transceiver or radio interface or a communication interface) configured to provide radio communications with a plurality of wireless terminals, a network interface circuit 205 (also referred to as a network interface) configured to provide communications with other base stations of the RAN (e.g., over the X2 interface), and a processor circuit 203 (also referred to as a processor) coupled to the transceiver circuit and the network interface circuit, and a memory circuit 207 (also referred to as memory) coupled to the processor circuit. The memory circuit 207 may include computer readable program code that when executed by the processor circuit 203 causes the processor circuit to perform operations according to embodiments disclosed herein. According to other embodiments, processor circuit 203 may be defined to include memory so that a memory circuit is not separately provided.

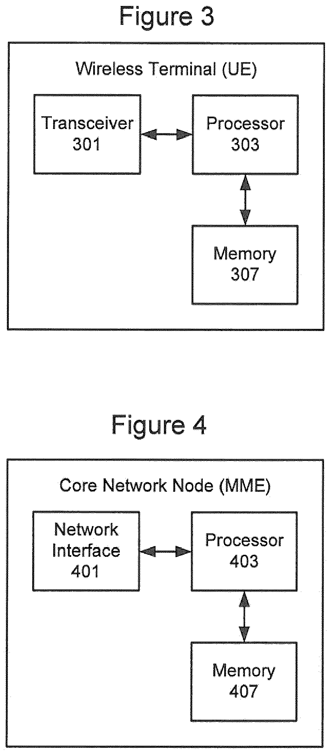

Figure 3 is a block diagram illustrating elements of a wireless terminal UE of Figure 1. As shown, a wireless terminal UE may include a transceiver circuit 301 (also referred to as a transceiver) including a transmitter and a receiver configured to provide radio communications with a base station BS, a processor circuit 303 (also referred to as a processor) coupled to the transceiver circuit, and a memory circuit 307 (also referred to as memory) coupled to the processor circuit. The memory circuit 307 may include computer readable program code that when executed by the processor circuit 303 causes the processor circuit to perform operations according to embodiments disclosed herein. According to other embodiments, processor circuit 303 may be defined to include memory so that a memory circuit is not separately provided.

Figure 4 is a block diagram illustrating elements of a core network node (e.g., an MME and/or an SGSN) of Figure 1. As shown, a core network node may include a network interface circuit 401 (also referred to as a network interface or a communication interface) configured to provide communications with base stations of the RAN (e.g., over the S1 interface), a processor circuit 403 (also referred to as a processor) coupled to the network interface circuit, and a memory circuit 407 (also referred to as memory) coupled to the processor circuit. The memory circuit 407 may include computer readable program code that when executed by the processor circuit 403 causes the processor circuit to perform operations according to embodiments disclosed herein. According to other embodiments, processor circuit 403 may be defined to include memory so that a memory circuit is not separately provided.

In LTE, downlink PDSCH (Physical Downlink Shared Channel) assignments use resource elements spread over all OFDM symbols in a 1ms downlink subframe. According to some embodiments disclosed herein, latency may be reduced by using PDSCH assignments covering a (consecutive) subset of symbols within a subframe. Such a subset of symbols may be referred to as a sub-subframe (SSF), and data assignments covering a SSF are illustrated herein as sPDSCH. To maintain backward compatibility and to be able to frequency multiplex legacy wireless terminal users, the existing OFDM modulation may be used, and the sub-subframe division may be done at the OFDM symbol level. As one example, the duration of a subframe may be 1 ms including 14 OFDM symbols, and the duration of a SSF may be seven OFDM symbols (i.e., 0.5ms, for the case with a normal cyclic prefix).

By assigning sPDSCH resources within a sub-subframe (i.e., with shorter duration as compared to a full subframe), decoding latency may be reduced since the transmission ends earlier and take less time, even for roughly the same processing capability, assuming that the payload size is down scaled appropriately. This reduction in latency may further be used to reduce HARQ (Hybrid Automatic Repeat Request) RTT (Round Trip Time) since ACK/NACK (Acknowledge/Negative-Acknowledge) feedback can be provided earlier from a downlink transmission and UE side processing perspective. If the uplink enables timely transmission of ACK/NACK feedback and the network processing time related to retransmissions can be scaled with the same factor as the SSF as compared to the 1 ms sub-frame, then the HARQ RTT may be reduced with the same factor. For a 0.5 ms SSF, for example, the HARQ RTT may become 4 ms (instead of 8 ms). However, embodiments of inventive concepts described herein are not dependent on a reduction of the processing time.

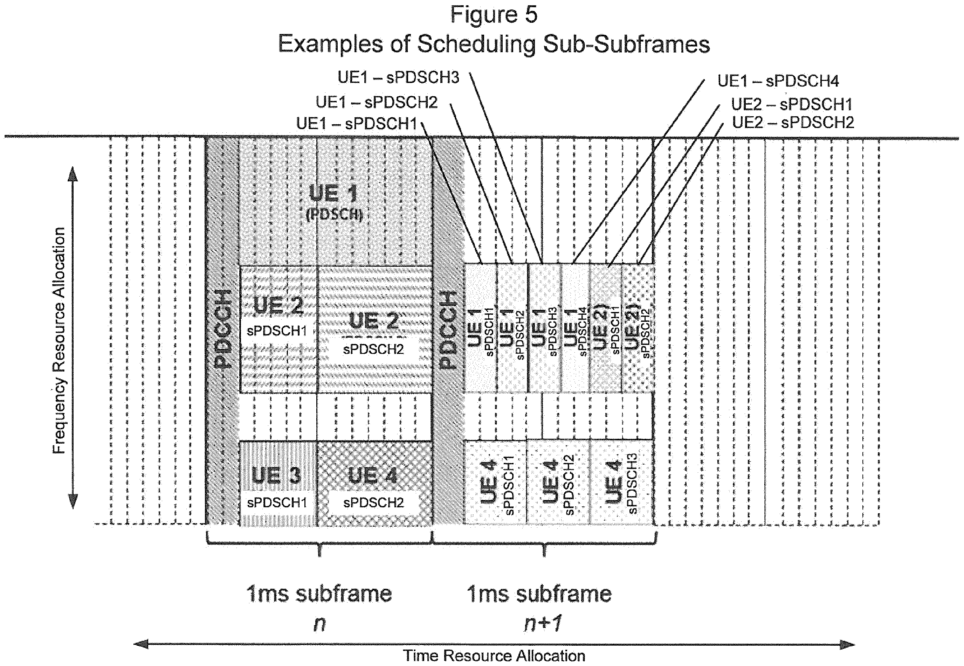

An example of sub-subframe assignments for wireless terminals UE1, UE2, UE3, and UE4 of Figure 1 over two subframes n and n+1 is illustrated in Figure 5. It should be noted that other SSF lengths are possible, and that all SSFs are not required to have the same duration in terms of number(s) of OFDM symbols. In the example of Figure 5, wireless terminal UE1 is assigned a full subframe (14 symbols less symbols used for Physical Downlink Control Channel or PDCCH) over a first frequency resource for downlink transmission in subframe n, and wireless terminal UE1 is assigned four 2 symbol sub-subframes over a second frequency resource for downlink transmissions in subframe n+1. Wireless terminal UE2 is assigned two 7 symbol sub-subframes (less symbols used for PDCCH) over the second frequency resource for downlink transmission in subframe n, and wireless terminal UE2 is assigned two 2 symbol sub-subframes over the second frequency resource for downlink transmissions in subframe n+1. Wireless terminal UE3 is assigned one 7 symbol sub-subframe (less symbols used for PDCCH) over a third frequency resource for downlink transmission in subframe n, and there is no downlink assignment for wireless terminal UE3 for sub-subframe n+1. Wireless terminal UE4 is assigned one 7 symbol sub-subframe over the third frequency resource for downlink transmission in subframe n, and wireless terminal UE4 is assigned three 4 symbol sub-subframes over the third frequency resource for downlink transmissions in subframe n+1. In addition, legacy control information and reference signals (such as legacy DCI PDCCH and CRS) may be transmitted, and PDSCH/sPDSCH is not mapped to such occupied resource elements.

Existing physical layer downlink control channels, Physical Downlink Control Channel (PDCCH) and EPDCCH (Enhanced PDCCH), may be transmitted once per 1ms subframe. Furthermore,

- A PDCCH is distributed over the whole carrier bandwidth, but is time multiplexed with PDSCH over the first 1-4 symbols in the subframe.
- An EPDCCH is distributed over the whole 1ms subframe, but is frequency multiplexed with PDSCH and multiplexed onto one or multiple PRB pairs for localized and distributed transmission respectively.
- PDCCH has common search space where all UEs may need to detect common cell specific control information.
- Depending whether a wireless terminal UE has been configured for ePDCCH or not, the wireless terminal UE processor 303 searches UE specific control information from wireless terminal UE search space of ePDCCH or PDCCH, respectively.
- The exact DownLink DL data allocation is given in downlink control information (DCI) format which may have different options depending on, for example, a configured transmission mode.
- The size of the PDCCH region can change dynamically on subframe basis, with the size of the PDCCH region being signaled on the PCFICH (Physical Control Format Indicator Channel) in the beginning of the 1ms subframe.
- The frequency domain allocation of the EPDCCH may be semi-statically configured by means of higher layer signaling.

Current control channels carry control information, referred to as downlink control information (DCI). When a wireless terminal UE is configured with a certain transmission mode, the wireless terminal will (in each subframe when it is not in discontinuous reception DRX) attempt PDCCH decoding of a finite number of DCI formats transmitted on the PDCCH (or EPDCCH) for a number of candidate PDCCH resource allocations (referred to as a search space). The DCI format has a CRC (Cyclic Redundancy Check) which is scrambled by a wireless terminal UE identification (such as a C-RNTI), and when the CRC matches after descrambling, a PDCCH with a certain DCI format has been detected. There are also identifications that are shared by multiple terminals, such as the SI-RNTI which is used for transmission of system information.

Different DCI formats may be distinguished by different pay load sizes (i.e., number of bits in the DCI format). Hence, if we have multiple DCI formats of different sizes, a need for UE blind decoding may increase since each size requires a decoding attempt for each candidate PDCCH resource allocation.

There are currently a number of different DCI formats. *See,* 3GPP TS 36.212, V12.3.0 (2014-12) for DL resource assignments including format 1,1A,1B,1C, 1D, 2, 2A, 2B, 2C and 2D.

- Format 1: single codeword transmission:

  ◦ 1 bit to indicate resource allocation type (type 0 or type 1),

○ $\left\lceil N_{\mathrm{RB}}^{\mathrm{DL}} / P \right\rceil$ bits to indicate the resource allocation (type 0 or type 1),
○ 3 bits to indicate HARQ process number (4bits for TDD),
○ 3 bits to indicate new data indicator (NDI) and redundancy version (RV),
○ 5 bits to indicate modulation and code scheme (MCS).

- Format 1A, 1B, 1D:

○ $\left\lceil \log_2 (N_{\mathrm{RB}}^{\mathrm{DL}}(N_{\mathrm{RB}}^{\mathrm{DL}} + 1)/2) \right\rceil$ bits to indicate the resource allocation (type 2),
○ 3 bits to indicate HARQ process number (4bits for TDD),
○ 3 bits to indicate new data indicator (NDI) and redundancy version (RV),
○ 5 bits to indicate modulation and code scheme (MCS).

- Format 2,2A,2B,2C,2D: two codeword transmission:

○ $\left\lceil N_{\mathrm{RB}}^{\mathrm{DL}} / P \right\rceil$ bits to indicate the resource allocation (type 0 or type 1),
○ 3 bits to indicate HARQ process number (4bits for TDD),
○ 2 x 3 bits to indicate new data indicator (NDI) and RV,
○ 2 x 5 bits to indicate modulation and code scheme (MCS).

Here, P is the resource block group size which depends on the system bandwidth and $\left\lceil N_{\mathrm{RB}}^{\mathrm{DL}} \right\rceil$ is the number of resource blocks in the downlink.

As shown above, there are three different resource allocation types (Type 0, Type 1, and Type 2). For example, for Type 0, the system bandwidth is divided into resource block groups (RBGs) which consist of P PRB pairs, where P=1,2,3,4 depending on total bandwidth. Then, there is one bitmap indicating whether something is scheduled in an RBG, and then a bitmap per RBG. The principle is same/similar for Type 1 and Type 2, and resources are allocated in frequency always assuming 1ms length subframe.

The Downlink Control Information (DCI) for a downlink scheduling assignment may thus include information on downlink data resource allocation in the frequency domain (the resource allocation or frequency resource), modulation and coding scheme (MCS), and HARQ process information. In case of carrier aggregation, information related to which carrier the PDSCH is transmitted on may be included as well.

There are also DCI formats for UL grants, DCI format 0, and DCI format 4 as well as for power control commands and DCI formats 3 and 3A.

If control channels are only transmitted once per 1ms subframe as shown in Figure 5 and/or if control channels and DCIs are designed for PDSCH assignments with durations equal to the duration of the whole subframe, it may be difficult to further reduce latency. Moreover, existing control channels (PDCCH and EPDCCH) may not be suitable for efficient sharing of resources through frequency multiplexing between (legacy) UEs using 1ms subframes and UEs using shorter sub-subframes within the same subframe. For EPDCCH, the entire 1ms EPDCCH may need to be received in order to get the scheduling indication. It may thus be difficult to use EPDCCH to schedule shorter sub-subframes because the latency benefit may be lost when the wireless terminal UE waits until the end of the subframe to decode the control information and thus the downlink data. For PDCCH, the PDCCH could in theory be used and transmitted more often (i.e., more frequently than 1ms), but because PDCCH is spread over the entire bandwidth, this may be inefficient, resulting in unnecessary overhead.

According to some embodiments of inventive concepts, control information (such as PDSCH sub-subframe assignments) may be signaled more frequently than once per subframe (e.g., more frequently than once per 1ms), with reduced control information payloads relative to existing DCI formats, and only when needed.

For example, downlink control information may be partitioned into fast DCI (which can vary between different sub-subframes) and slow DCI (which may change, at most, once per subframe). The fast DCI may be conveyed to the wireless terminal UE using an sPDCCH transmission(s). The wireless terminal UE may monitor different sPDCCH candidate resources and attempt to decode an sPDCCH transmission intended for itself. If successful, the fast DCI from the sPDCCH (together with the slow DCI) may be used to determine an sPDSCH DL assignment or (sPUSCH UL grant) for the UE. Different embodiments may cover configuring sPDCCH resources, partitioning between slow and fast DCI, and/or conveying the DCI to the terminal. In LTE, uplink PUSCH scheduling grants may use resource elements spread over all OFDM symbols in a 1ms uplink subframe. According to some embodiments disclosed herein, latency may be reduced by using PUSCH grants covering a (consecutive) subset of symbols within a subframe. Such a subset of symbols may be referred to as a sub-subframe, and scheduling grants covering a sub-subframe may be transmitted on a physical channel referred to as sPUSCH.

According to some embodiments, use of fast/slow control information (e.g., DCI) may enable scheduling decisions within a subframe, thereby reducing frame alignment delay and/or contributing to reduction of HARQ RTT as compared to using PDCCH alone. In addition, dynamic sharing of resources between (legacy) terminals using 1ms subframes and shorter sub-subframes may be enabled. Moreover, DCI overhead may be reduced as compared to re-using the PDCCH but transmitting it more often.

The scheduler in the base station BS (also referred to as an eNodeB) may allocate downlink PDSCH resources to terminals in the cell served by the base station, and the base station BS decides whether a wireless terminal is to be given an assignment (e.g., a downlink assignment) with 1ms subframe duration or an assignment with one or multiple sub-subframes with duration(s) shorter than a duration of the subframe. From a wireless terminal perspective, these assignments may change dynamically from subframe to subframe and may allow improvement/optimization of the end-user experience. For example, a 1ms subframe may be better from a throughput perspective, whereas a short sub-subframe(s) may be better from a latency perspective. For the commonly used TCP (Transmission Control Protocol) protocol, for example, user throughput may typically be latency limited during slow-start and may later become throughput limited.

According to some embodiments, resources may be dynamically roughly divided in the frequency domain between legacy PDSCH subframe assignments and sub-subframe sPDSCH assignments once every subframe and/or once every ms. In such cases, one scheduler may schedule legacy 1ms subframes every subframe and/or ms, whereas a sub-subframe scheduler (operating at higher frequency) may schedule sub-subframes within the resources roughly assigned for such transmissions. Downlink assignments for 1ms subframes may be conveyed using PDCCH whereas assignments for the sub-subframes may be conveyed using the sPDCCH.

If a latency sensitive packet arrives after the rough division, it may be possible for the sub-subframe scheduler to override the previous division and schedule a sub-subframe in resources previously assigned as 1ms subframe. It may happen that the terminal receiving the legacy subframe assignment may not be able to correctly decode the PDSCH.

The slow control information (e.g., slow DCI) may be changed at most once per subframe and/or once per ms and may be common for all sub-subframes in a given subframe. The slow control information (e.g., DCI) may either be intended for a specific wireless terminals UE or common to a group of several wireless terminals UEs. The slow control information (e.g., DCI) may be:

- Semi-statically configured by higher layer RRC or MAC signaling and hence changed relatively infrequently (e.g., slow control information may remain static over a plurality of subframes);
- Dynamically (re-)configured using a (E)PDCCH (or even a sPDCCH) transmitted in every subframe; or
- Static.

In the case that the slow control information (e.g., slow DCI) is transmitted on a (E)PDCCH and is intended for several wireless terminals UEs, the slow control information (e.g., slow DCI) may be scrambled using a group RNTI (Radio Network Temporary Identifier) common to all of the recipients of the group of wireless terminals. A single wireless terminal UE can belong to more than one group, and multiple group RNTIs may thus be assigned to a single wireless terminal UE. The fast control information (e.g., fast DCI) may be intended for a specific UE, and the fast control information (e.g., fast DCI) may thus be scrambled using a wireless terminal UE specific identification, such as the C-RNTI (Cell Radio-Network Temporary Identifier).

A significant payload reduction in the sPDCCH fast control information (e.g., fast DCI) may be achieved with respect to the frequency domain resource allocation. For example-

- According to some embodiments, the fast control information (e.g., fast DCI) on the sPDCCH may not include any sPDSCH frequency domain resource allocation information at all. In such embodiments, the wireless terminal UE may determine frequency domain resource allocation information from the slow control information (e.g., slow DCI), which may be provided using higher layer configuration and/or PDCCH resource allocation.

- According to some other embodiments, the fast control information (e.g., fast DCI) on the sPDCCH may include a short field indicating one out of a few different frequency domain resource allocations, predefined and/or conveyed by the slow control information (e.g., slow DCI) including configuration by higher layers and/or via PDCCH.

Another form of payload reduction may be to use a shorter wireless terminal UE specific identification for the sPDCCH with fewer bits than the 16 bits used for the C-RNTI.

According to some embodiments, further payload reduction may be achieved by indicating more parameters common to all assigned sub-subframes, such as, MCS (Modulation and Coding Scheme) and MIMO (Multiple Input Multiple Output) related precoding information. This may be useful when all sub-subframes are assigned to a single wireless terminals UE. Note that the control information (e.g., DCI) can carry both DL scheduling assignments as well as UL grants. Even though the present disclosure has a DL focus, the UL assignments may be covered as well in some embodiments.

According to some embodiments, there may be two ways to configure the sPDCCH resource allocations: Semi-statically configured by higher layers; and/or dynamically varying from subframe to subframe.

According to some embodiments, information regarding configuration of sPDCCH resource allocations may be conveyed in the control information (e.g., DCI) of a PDCCH. Such a PDCCH could either be intended for a single wireless terminal UE (CRC scrambling with C-RNTI), or to a group of wireless terminals UEs (and have CRC scrambling with an RNTI that is monitored by several wireless terminals). According to some other embodiments, a signal similar to PCFICH may be defined that once every subframe would indicate sPDCCH resources, for example, selecting one out several allocations, each allocation being configured by higher layer signaling. In both of these embodiments, the starting symbol of the first position in the time domain could also be given as for EPDCCH and depend on the length of the PDCCH region.

For embodiments with dynamic variations, slow control information (e.g., DCI) once every subframe may configure the sPDCCH candidate resource(s) in both time and frequency. The physical channel could be either a (E)PDCCH or an sPDCCH.

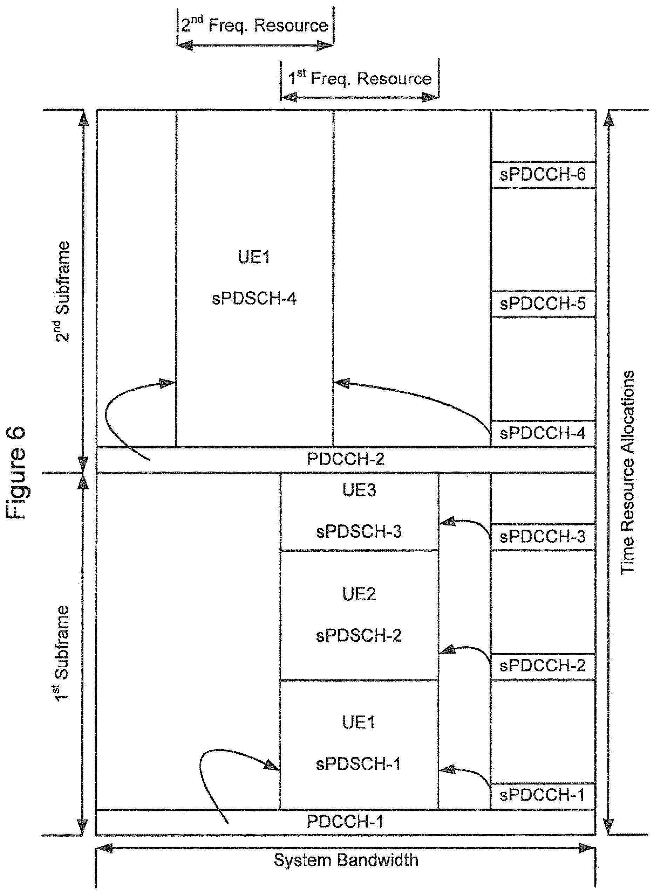

For each of these embodiments, the sPDCCH may use any number of OFDM symbols, and may be multiplexed in time or frequency with (s)PDSCH. In Figure 6, the sPDCCH is transmitted with a contiguous allocation at the band edge in the frequency domain, but it can also be (arbitrarily) distributed in the frequency domain with non-contiguous allocations, similar to EPDCCH. In Figures 6-10, the sPDCCH is shown being transmitted only in the first symbol of each respective subsubframe, but the sPDCCH might also be transmitted in multiple symbols of a respective sub-subframe.

The wireless terminal UE monitors sPDCCH resources and attempts decoding, for example, using the relevant (UE specific) RNTI for CRC descrambling. If the base station BS (eNodeB) has transmitted control information (e.g., DCI) on an sPDCCH for a particular wireless terminal UE, the wireless terminal UE may detect the control information through successful decoding (including descrambling based on the wireless terminal specific identification, e.g., RNTI). If the base station BS (eNodeB) is using the resources for PDSCH transmissions (e.g., for legacy 1ms PDSCH assignments), decoding may with sufficiently high probability fail and the terminal will detect that there was no control information (e.g., DCI) on a sPDCCH transmitted to it.

From a wireless terminal UE perspective according to some embodiments, each wireless terminal UE is assigned a group identification (e.g., RNTI) that is shared with a group of wireless terminals and an individual identification (e.g., C-RNTI) that is specifically assigned to that wireless terminal. The wireless terminal UE monitors the PDCCH transmission and attempts to unscramble downlink control information using the assigned group RNTI. If a match is found, the corresponding (slow) control information (e.g., slow DCI) may determine the frequency resource(s) used for any sPDSCH transmissions (for the group of wireless terminals) in the subframe. Similarly, the UE may monitor the possible sPDCCH candidate resources and try to unscramble them using its individual identification (e.g., C-RNTI). If a match is found, the fast control information (e.g., fast DCI) from the sPDCCH together with the frequency allocation from the slow control information (e.g., slow DCI) in the PDCCH determines the resources used for downlink data transmission over sPDSCH, as well as HARQ information and MCS information

Figures 6-10 illustrate different embodiments of allocating frequency/time resources for PDCCH, sPDCCH, and/or sPDSCH.

According to embodiments illustrated in Figure 6, frequency and/or time resources used by a fast control channel (e.g., sPDCCH) for transmission of fast control information (e.g., fast DCI), such as, wireless terminal UE assignments of sPDSCH sub-subframes and time resources thereof, may be configured using higher layer signaling from the base station (e.g., MAC and/or RCC signaling when the wireless terminal attaches to the base station). Accordingly, frequency and/or time resources used by sPDCCH may remain relatively static over a plurality of subframes. Frequency resources used by the sPDSCH downlink sub-subframes may be considered slow control information (e.g., slow DCI) and may be signaled once per ms using PDCCH to a group of UEs (sharing a same RNTI). While time resources for sPDCCH may be configured using higher layer signaling according to some embodiments, according to other embodiments time resources for sPDCCH may be configured each subframe using a slow control information transmitted via PDCCH.

In Figure 6, wireless terminals UE1, UE2, and UE3 may belong to a same group sharing a group identification (e.g., a group RNTI), and each wireless terminal UE1, UE2, and UE3 may have an individual identification (e.g., an individual C-RNTI). At the beginning of the 1st subframe, slow control information (e.g., slow DCI) may be scrambled with the group identification and transmitted over the slow control channel (e.g., PDCCH). More particularly, the slow control information may include a frequency resource (e.g., the 1st frequency resource) allocated for sPDSCH sub-sub frames used for transmissions to wireless terminals UE1, UE2, and UE3 during the first subframe. Accordingly, the frequency resource used for sPDSCH sub-subframes assigned to these wireless terminals may not change during a subframe. The group of wireless terminals sharing the group identification can thus unscramble the slow control information (e.g., the frequency resource) for the subframe using the group identification.

As noted above, the time/frequency resources for wireless terminals UE1, UE2, and UE3 to receive fast control information using a fast control channel (e.g., sPDCCH) may be configured by higher layer signaling. At the time for each transmission of fast control information using a fast control channel (e.g., sPDCCH), each wireless terminal UE1, UE2, and UE3 of the group may thus attempt to descramble the fast control channel (e.g., sPDCCH) using the respective individual identification (e.g., C-RNTI). The fast control information may define a time resource for a sub-subframe assigned to the particular wireless terminal. The fast control channel may also include MCS (modulation and coding scheme) information, MIMO (multiple input multiple output) precoding information, HARQ ACK/NACK information, etc. for the assigned sub-subframe. According to additional embodiments of Figure 6, the slow control information may include a plurality of frequency resources available for sub-subframe assignments, and the fast control information for each sub-subframe may include an identification of one of the available frequency resources.

In the example of Figure 6, the fast control channel sPDCCH-1 may be used to transmit fast control information scrambled with the individual identification for wireless terminal UE1 with the fast control information defining a time resource for the first sub-subframe sPDSCH-1 assigned to wireless terminal UE1. Wireless terminal UE1 may thus descramble the fast control information using its individual identification, and receive downlink data over the assigned sub-subframe sPDSCH-1 (defined by a frequency resource received via PDCCH and a time resource received via sPDCCH-1). Because wireless terminals UE2 and UE3 are unable to descramble the control information scrambled with the individual identification of wireless terminal UE1, wireless terminals UE2 and UE3 will not attempt to receive downlink data over sub-subframe sPDSCH-1.

Similarly, the fast control channel sPDCCH-2 may be used to transmit fast control information scrambled with the individual identification for wireless terminal UE2, with the fast control information defining a time resource for the second sub-subframe sPDSCH-2 assigned to wireless terminal UE2. Wireless terminal UE2 may thus descramble the fast control information using its individual identification, and then receive downlink data over the assigned sub-subframe sPDSCH-2 (defined by a frequency resource received via PDCCH and a time resource received via sPDCCH-2). Because wireless terminals UE1 and UE3 are unable to descramble the control information scrambled with the individual identification of wireless terminal UE2, wireless terminals UE1 and UE3 will not attempt to receive downlink data over sub-subframe sPDSCH-2.

The fast control channel sPDCCH-3 may be used to transmit fast control information scrambled with the individual identification for wireless terminal UE3, with the fast control information defining a time resource for the third sub-subframe sPDSCH-3 assigned to wireless terminal UE3. Wireless terminal UE3 may thus descramble the fast control information using its individual identification, and then receive downlink data over the assigned sub-subframe sPDSCH-3 (defined by a frequency resource received via PDCCH and a time resource received via sPDCCH-3). Because wireless terminals UE1 and UE2 are unable to descramble the control information scrambled with the individual identification of wireless terminal UE3, wireless terminals UE 1 and UE2 will not attempt to receive downlink data over sub-subframe sPDSCH-3.

At the beginning of the 2nd subframe, slow control information (e.g., slow DCI) may be scrambled with the group identification and transmitted over the slow control channel (e.g., PDCCH-2). More particularly, the slow control information may include a frequency resource (e.g., the 2nd frequency resource) allocated for sPDSCH sub-subframes used for transmissions to wireless terminals UE1, UE2, and UE3 during the second subframe. Different frequency resources may thus be allocated during different subframes as shown in Figure 6.

The fast control channel sPDCCH-4 may be used to transmit fast control information scrambled with the individual identification for wireless terminal UE1 with the fast control information defining a time resource for the sub-subframe sPDSCH-4 assigned to wireless terminal UE1 in the second subframe. Wireless terminal UE1 may thus descramble the fast control information using its individual identification, and then receive downlink data over the assigned sub-subframe sPDSCH-4 (defined by a frequency resource received via PDCCH-1 and a time resource received via sPDCCH-4). Because wireless terminals UE2 and UE3 are unable to descramble the control information scrambled with the individual identification of wireless terminal UE1, wireless terminals UE2 and UE3 will not attempt to receive downlink data over sub-subframe sPDSCH-4.

As further shown in Figure 6, numbers and relative locations (in frequency and time) of fast control channel assignments for the first subframe (sPDCCH-1, sPDCCH-2, and sPDCCH-3) and the second subframe (sPDCCH-4, sPDCCH-5, and sPDCCH-6) may be the same, but not all such assignments are required to be used. As shown in the second subframe of Figure 6, for example, a full duration of the second subframe is assigned by fast control channel sPDCCH-4 for sub-subframe sPDSCH-4. Accordingly, and fast control channel assignments sPDCCH-5 and sPDCCH-6 may thus be unused with respect to wireless terminals sharing the group identification discussed above. Moreover, a frequency resource for the group of wireless terminals UE1, UE2, and UE3 may be unused for some or all of a subframe. For example, sub-subframe sPDSCH-4 may occupy only a first third of the second subframe (after completion of slow control channel PDCCH-2) with a remainder of the second frequency resource being unused in the second subframe.

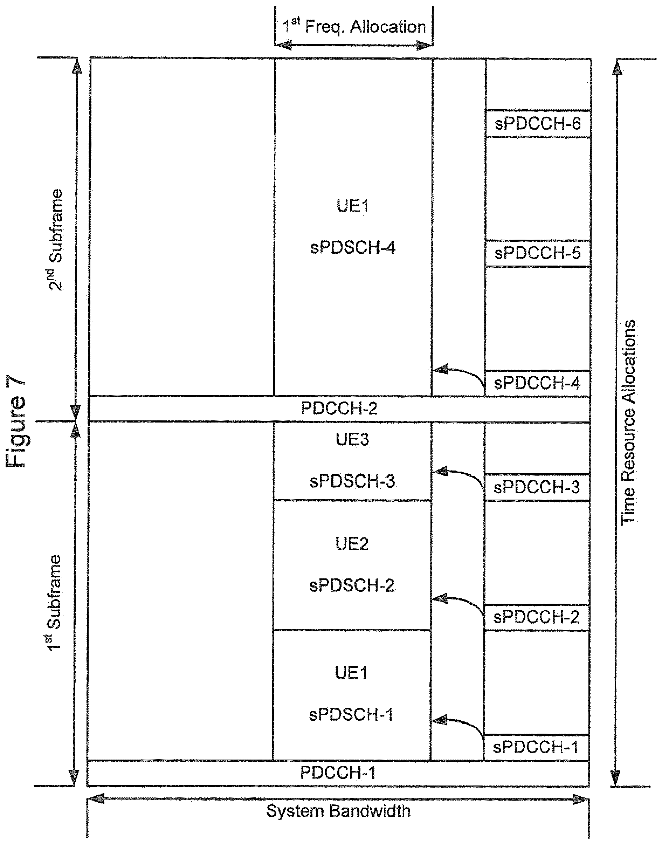

According to embodiments of Figure 7, time and frequency resources used by fast control channels sPDCCH for a group of wireless terminals sharing a group identification and frequency resources used by sub-subframes sPDSCH for the group of wireless terminals sharing the group identification may be configured at the wireless terminals using higher layer signaling from the base station. In such embodiments, frequency resources used by sub-subframes sPDSCH for the group of wireless terminals may remain relatively static over a plurality of subframes, and the frequency and/or time resources used by fast control channels sPDCCH may remain relatively static from one subframe to the next. According to some other embodiments, a plurality of frequency resources for sub-subframes sPDSCH may be configured at the wireless terminal using higher layer signaling, and fast control information for a particular sub-subframe sPDSCH may identify one of the plurality of frequency resources for that sub-subframe sPDSCH.

Otherwise, base station and wireless terminal operations relating to Figure 7 may be similar to those discussed above with respect to Figure 6. In general, a fast control channel sPDCCH may be used to transmit fast control information scrambled with an individual identification for a respective wireless terminal with the fast control information defining a time resource for a sub-subframe sPDSCH assigned to the wireless terminal.

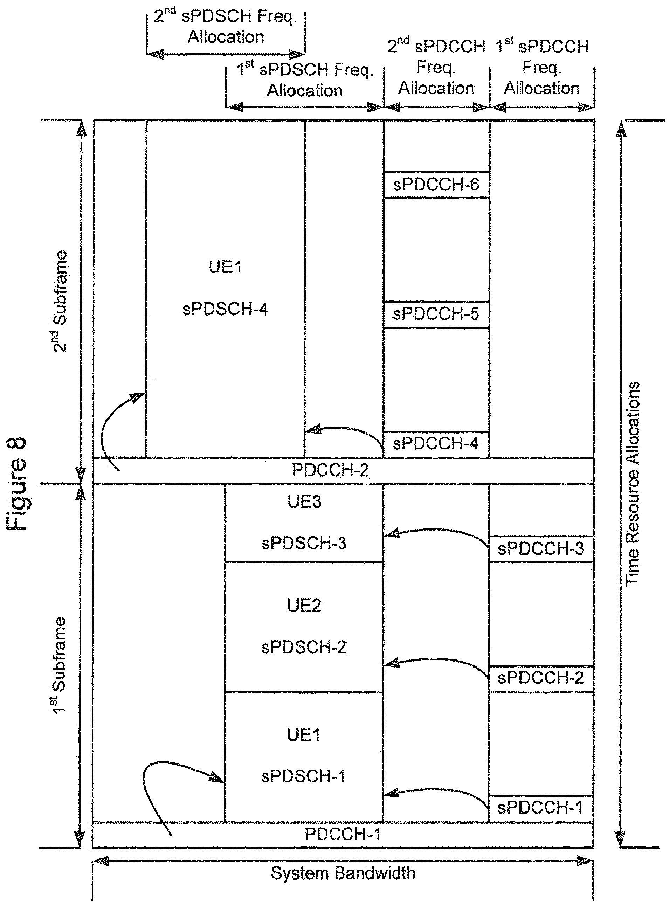

According to embodiments of Figure 8, the frequency resources used by fast control channels sPDCCH and sub-subframes sPDSCH may be transmitted as slow control information and signaled once per ms (e.g., once per subframe) using slow control channel PDCCH to a group of wireless terminals sharing a group identification. As discussed above with respect to Figure 6, frequency resources used for sub-subframes sPDSCH may thus change from one subframe to the next. In addition, frequency resources used for fast control channels sPDCCH may change from one subframe to the next. Otherwise, wireless terminals and base stations operations relating to Figure 8 may be similar to those discussed above with respect to Figures 6 and/or 7.

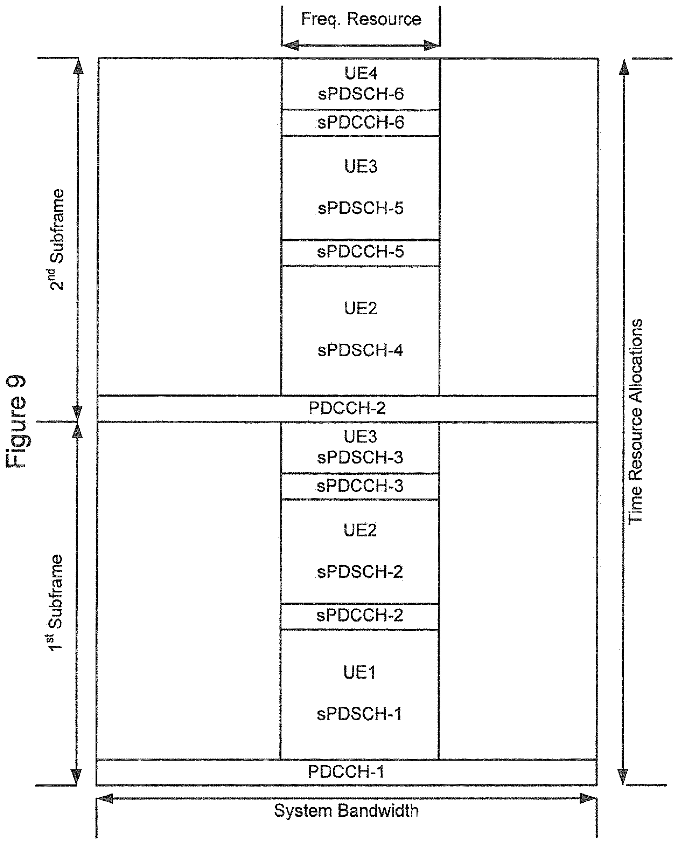

According to embodiments of Figure 9, a common frequency resource may be used by fast control channels sPDCCH and sub-subframes sPDSCH, and this common frequency resource may be configured at the wireless terminals using higher layer signaling from the base station. As shown in Figure 9, the frequency resource may thus remain relatively static from one subframe to the next. As before, wireless terminals UE1, UE2, UE3, and UE4 may be assigned a same group identification (e.g., a group RNTI), but different individual identifications (e.g., individual C-RNTI's).

In embodiments of Figure 9, all wireless terminals of the group may monitor the slow control channel PDCCH and each fast control channel sPDCCH of each subframe using their respective individual identifications to determine if a sub-subframe is being assigned. For example, a time resource for a first sub-subframe sPDSCH-1 may be transmitted as fast control information using slow control channel PDCCH-1 and scrambled using the individual identification for wireless terminal UE1. Wireless terminal UE 1 may thus receive this fast control information, and responsive thereto, wireless terminal UE1 can proceed to receive downlink data in sub-sub-frame sPDSCH-1.

A time resource for a second sub-subframe sPDSCH-2 may be transmitted as fast control information using fast control channel sPDCCH-2 and scrambled using the individual identification for wireless terminal UE2.

Wireless terminal UE2 may thus receive this fast control information, and responsive thereto, wireless terminal UE2 can proceed to receive downlink data in sub-sub-frame sPDSCH-2.

A time resource for a third sub-subframe sPDSCH-3 may be transmitted as a fast control information using fast control channel PDCCH-3 and scrambled using the individual identification for wireless terminal UE3. Wireless terminal UE3 may thus receive this fast control information, and responsive thereto, wireless terminal UE3 can proceed to receive downlink data in sub-sub-frame sPDSCH-3.

A time resource for a fourth sub-subframe sPDSCH-4 may be transmitted as a fast control information using slow control channel PDCCH-2 and scrambled using the individual identification for wireless terminal UE2. Wireless terminal UE 2 may thus receive this control information, and responsive thereto, wireless terminal UE2 can proceed to receive downlink data in sub-subframe sPDSCH-4.

A time resource for a fifth sub-subframe sPDSCH-5 may be transmitted as a fast control information using fast control channel sPDCCH-5 and scrambled using the individual identification for wireless terminal UE3. Wireless terminal UE3 may thus receive this fast control information, and responsive thereto, wireless terminal UE3 can proceed to receive downlink data in sub-sub-frame sPDSCH-5.

A time resource for a sixth sub-subframe sPDSCH-6 may be transmitted as a fast control information using fast control channel PDCCH-6 and scrambled using the individual identification for wireless terminal UE4. Wireless terminal UE4 may thus receive this fast control information, and responsive thereto, wireless terminal UE4 can proceed to receive downlink data in sub-sub-frame sPDSCH-6.

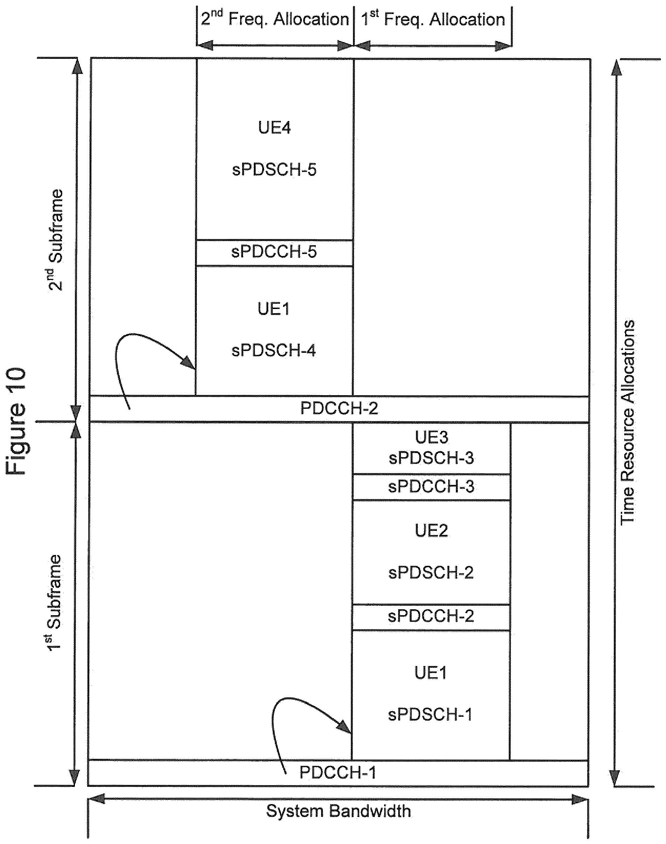

According to embodiments of Figure 10, a common frequency resource used by fast control channels sPDCCH and sub-subframes sPDSCH may be provided as slow control information and signaled once per ms (e.g., once per subframe) using the slow control channel PDCCH to a group of wireless terminals UE1, UE2, UE3, and UE4 sharing a group identification. As further shown in Figure 10, time resources used by fast control channels sPDCCH may also be provided as slow control information and signaled once per ms (e.g., once per subframe) using slow control channel PDCCH to the group of wireless terminals. Accordingly, frequency resources for sub-subframes sPDSCH and fast control channels sPDCCH may change from one subframe to the next, and numbers/timings of fast control channels sPDCCH may change from one subframe to the next.

According to embodiments discussed above, a group of wireless terminals UEs may be provided with information regarding time and frequency resources for fast control information transmitted via fast control channels sPDCCH, once per subframe via PDCCH, or via higher layer signaling from the base station, and time resources for sub-subframes sPDSCH assigned to particular wireless terminals of the group may be received as fast control information via fast control channels sPDCCH. A wireless terminal may thus combine partial control information received via a fast control channel sPDCCH with less frequently signaled control information in a subframe structure to receive sub-subframe assignments.

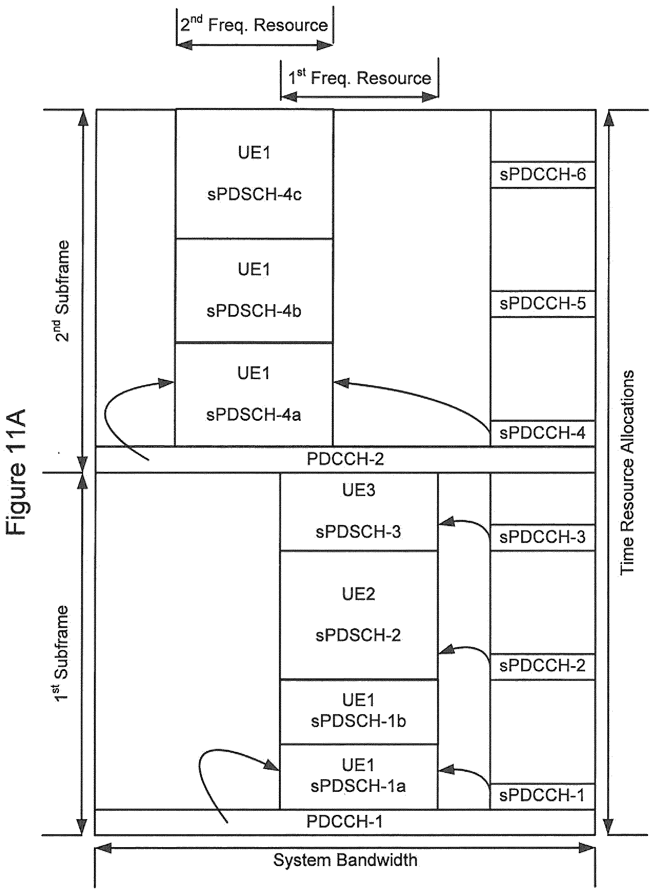

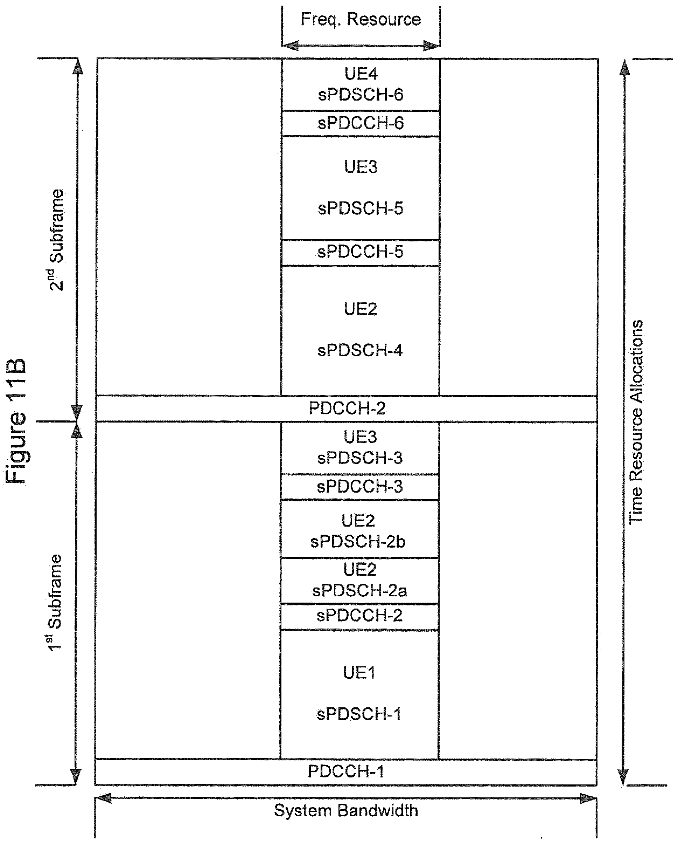

While not shown in Figures 6-10, a fast control channel sPDCCH may be used to assign multiple sub-subframes to the same wireless terminal. As shown for example in Figure 11A, corresponding to Figure 6, fast control channel sPDCCH-1 may be used to transmit fast control information assigning two consecutive sub-subframes for downlink transmission of data to wireless terminal UE1 in the first subframe, and fast control channel sPDCCH-4 may be used to transmit fast control information assigning three consecutive sub-subframes for downlink transmission of data to wireless terminal UE1 in the second subframe. Otherwise, Figure 11A is the same as Figure 6, and the same/similar concepts may apply with respect to embodiments of Figures 7 and 8. Similarly in Figure 11B, corresponding to Figure 9, fast control channel sPDCCH-2 may be used to transmit fast control information assigning two consecutive sub-subframes for downlink transmission of data to wireless terminal UE1. Otherwise, Figure 11B is the same as Figure 9, and the same/similar concepts may apply with respect to embodiments of Figure 10.

In embodiments illustrated in Figures 6, 7, 8, 9, 10, 11A, and 11B, sPDCCH is shown with contiguous frequency resource allocations, but according to other embodiments, the frequency resource allocations of sPDCCH in Figures 6, 7, 8, 9, 10, 11A, and 11B may be distributed in the frequency domain with non-contiguous allocations. Similarly, in embodiments illustrated in Figures 6, 7, 8, 9, 10, 11A, and 11B, sPDSCH is shown with contiguous frequency resource allocations, but according to other embodiments, the frequency resource allocations of sPDSCH in Figures 6, 7, 8, 9, 10, 11A, and 11B may be distributed in the frequency domain with non-contiguous allocations.

LTE (Long Term Evolution) is a radio access technology based on radio access network control and scheduling. These facts may impact latency performance since a transmission of data may need a round trip of lower layer control signaling.

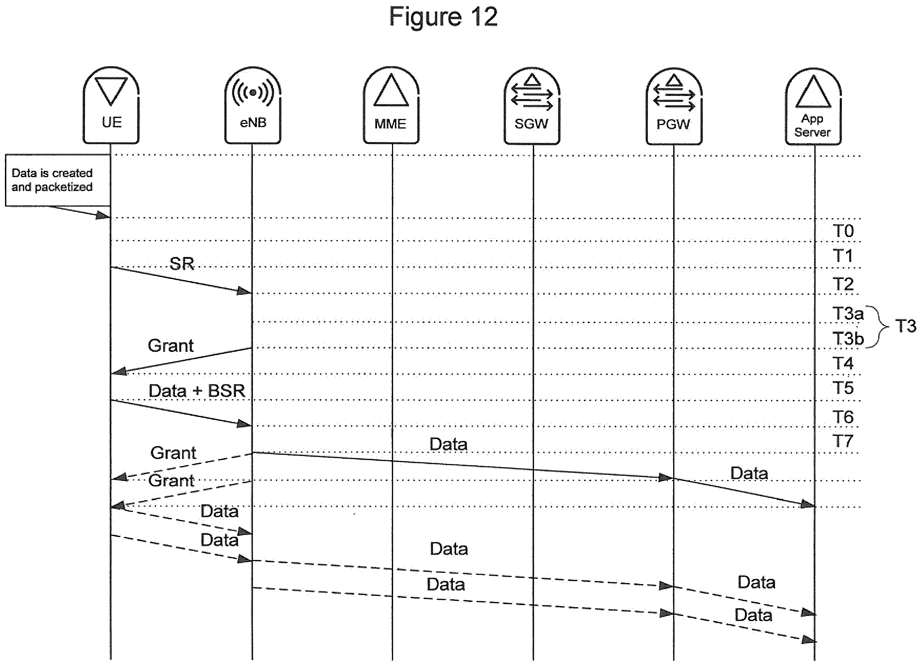

Figure 12 is a signaling diagram illustrating control signaling timing for scheduling requests. In Figure 12, the data may be created at the wireless terminal UE by higher layers at time T0, then the wireless terminal UE modem may send a scheduling request (SR) to the base station eNB, the base station eNB may process this SR and respond with a grant, so that the data transfer can start at T6 in Figure 12.

Accordingly, one area to address regarding packet latency reductions is the reduction of transport time of data and control signaling (by addressing the length of a Transmission Time Interval TTI) and the reduction of processing time of control signaling (e.g., the time it takes for a wireless terminal UE to process a grant).

UE receiver processing

Since the time needed for turbo decoding may depend on the code block size, latency can be reduced by reducing the code block size. Hence, if the code block size (or equivalently the transport block size) is reduced, the decoding result may be available earlier (for a given decoding capability in terms of number of parallel decoders). If instead of transmitting a single large code block of length 6000 bits once every 1 ms, two consecutives blocks of length 3000 bits are transmitted every 0.5 ms, a decoding latency for each block may be roughly (to a first order) halved, while still sustaining the bit rate at roughly the same complexity. Some performance degradations may be expected (e.g. due to shorter block length), and a tradeoff may be expected between latency and receiver performance (but not necessarily system or end user performance).

"Sub-subframes"

From the disclosure above regarding wireless terminal UE receiver processing, there may be further opportunities to reduce latency for wireless terminal UE receiver processing by having PDSCH assignments not only covering all OFDM symbols in a 1 ms subframe, but also by having PDSCH assignments (also referred to as sub-subframes or sPDSCH) with shorter durations covering a lesser number of consecutive OFDM symbols. Durations of such assignments may vary from subframe to subframe as illustrated, for example, in Figure 5.

In future versions of LTE standards, wireless terminals UEs may have PDSCH assignments that span a subset of OFDM symbols in the time domain of a subframe, rather than spanning all OFDM symbols (except symbols used by PDCCH and other good signals) of a subframe. Note that Figure 5 does not show existing or future signals such as CRS (Cell Specific Reference Signal), CSI-RS (Channel State Information Reference Signals), and/or EPDCCH (Enhanced Physical Downlink Control Channel), meaning that all resource elements within the resource assignments may not be available for data transmission.

One way in which such resource assignments can be conveyed to the wireless terminal UE is through the use of a new form of PDCCH control channel (referred to as an s-PDCCH control channel or sPDCCH control channel), that may be transmitted in every sub-subframe as described in the U.S. provisional application "Defining Sub-Subframe Channels For Data Communication Using Separately Provided Frequency And Time Resources" filed concurrently herewith (Attorney Docket No. P46164US1). Examples of such sub-subframes are illustrated in Figures 5, 6-10, and 11A-B.

In the example illustrated in Figure 5, wireless terminal UE1 has one (legacy) PDSCH resource assignment (e.g., 12 symbols) using a first frequency resource in subframe n and four sPDSCH resource assignments in subframe n+1 (with each of the four assignments covering 2 symbols) using a second frequency resource. Similarly, UE 2 receives two sPDSCH assignments in subframe n using the second frequency resource, one in the first slot (e.g., 5 symbols) and another one in the second slot (e.g., 7 symbols). Wireless terminal UE3 receives one sPDSCH assignment (e.g., 5 symbols) in subframe n using a third frequency resource, and no assignments in subframe n+1. Wireless terminal UE4 receives one sPDSCH assignment (e.g., 7 symbols) in subframe n using the third frequency resource, and three sPDSCH assignments (e.g., 4 symbols each) in subframe n+1 using the third frequency resource.

According to some embodiments disclosed herein, a subframe may include 14 symbols over a 1 ms (millisecond) duration. Moreover, a subframe may include two slots, with each slot including 7 symbols over an 0.5 ms duration.

Currently, two kinds of reference signals can be used for channel estimation for data demodulation:

• Cell specific reference signals (CRS or CRS reference signals), which take up 8 to 24 REs (Resource Elements) in a PRB (Physical Resource Block). Note that CRS cannot be used to demodulate non-codebook based precoding for multi-antenna transmission.

• User specific demodulation reference signals (DMRS or DMRS reference signals), which take up 12 or 24 REs in a PRB. As DMRS are user specific, DMRS can be used for non-codebook precoding, but their position at the last two symbols in each slot may make them less useful from a latency perspective.

Unlike DMRS, CRS is not a precoded reference signal because CRS is cell specific and not UE specific. Thus, all wireless terminals UEs may estimate the non-precoded channel from the same CRS REs (resource elements). Wireless terminals UEs that are configured with a CRS based transmission mode that uses codebook based precoding (e.g., TM4), may receive knowledge on the precoding matrix used for the CRS in the DCI (e.g., DCI 2 for TM4). Because Cell Specific Reference Signals CRS are cell specific, the Reference Signals RS are sent all the time, independent of load in the cells. Thus, especially if the network is configured for non-shifted CRS positions, the CRS REs of one base station or cell may be subject to heavy interference from neighbor cell CRS transmissions. There are also proposals to remove the CRSs (e.g., to enable DTX for energy savings and/or to reduce interference in the network). In Release 12, for example, the small cell ON/OFF feature enables ceasing CRS transmission for a carrier that is deactivated for all users.

Applying a similar structure to legacy LTE with one set of DMRS for each sub-subframe may be unsuitable because significant overhead may be required in terms of a number of REs used for reference signals compared to the number of REs used for data transmission. Further, the current DMRSs are placed at the very end of the slot, which may not be a desirable choice with respect to latency.

According to some embodiments of inventive concepts, a short DMRS (S-DMRS) may be transmitted in a first OFDM symbol(s) in a first sub-subframe in a sequence of multiple sub-subframes (that may be consecutive sub-subframes) assigned to a specific wireless terminal UE, without transmitting any reference signals in later ones of the multiple sub-subframes assigned to the wireless terminal (unless the precoding matrix or the channel changes significantly). Note that the sub-subframes do not need to be consecutive. For example, if wireless terminal B is scheduled for one OFDM symbol after scheduling wireless terminal A, and then wireless terminal A is scheduled again, transmission of another SDMRS to terminal A may not be needed. For example, when the two assignments to the same wireless terminal are within one 1ms subframe or even within a 0.5ms slot, another SDMRS may not be needed.

According to some embodiments of inventive concepts, an SDMRS may be included in each sub-subframe. Due to the short time duration of the suggested sub-subframes (e.g., 1-7 OFDM symbols in length), however, inclusion of an SDMRS in each sub-subframe may lead to overuse of resources allocated to reference signals.

Compared to CRS based channel estimation and demodulation, proposed S-DMRS reference signals may allow demodulation without knowledge of the precoder matrix used by the base station.

In each sub-subframe including an SDMRS reference signal, placement of the SDMRS in the first OFDM symbol in the sub-subframe may enable the wireless terminal to start estimating the channel or building the channel estimate/estimator while receiving the rest of the sub-subframe. Use of such SDMRS references signals for channel estimation may allow channel estimation across subframe boundaries, allowing improved channel estimates.

If certain resources are allocated for data transmission to a specific terminal in a sub-subframe of a subframe, the base station BS processor 203 may determine whether there is a need to send a SDMRS reference signal to the wireless terminal UE. According to some embodiments, base station processor 203 may determine whether the last transmission to the wireless terminal used the same precoder matrix and took place less than T1 symbols previously, where T1 is a threshold that can be configured.

If not, then base station processor 203 may send an SDMRS reference signal to the wireless terminal for the sub-subframe, and otherwise, base station processor 203 may use the sub-subframe resources to instead send data. When determining whether to include an SDMRS reference signal for a sub-subframe, base station processor 203 may also consider, for example, the CQI (Channel Quality Indicator) reported by the wireless terminal UE and/or some estimate of what Doppler spread the wireless terminal UE is exposed to (e.g., by considering channel variations in the uplink).

According to some embodiments, base station processor 203 may be configured so that every $N^{th}$ sub-subframe includes an SDMRS reference signal, where N can count the number of sub-subframes (with N possibly being reset with a certain periodicity such as 0.5 ms or 1 ms) or the number of consecutive sub-subframes assigned to the wireless terminal UE. For example, the first sub-subframe in which a wireless terminal UE is scheduled in a slot may always include an SDMRS reference signal.

A new control information field (e.g., a new DCI field) in the PDCCH control channel and/or the SPDCCH control channel may indicate for each sub-subframe whether or not the sub-subframe includes an SDMRS reference signal. In addition or in an alternative, the new control information may indicate for a future sub-subframe whether or not the future sub-subframe includes sDMRS reference signals. For example, control information in one PDCCH control channel or in one sPDCCH control channel may assign a plurality of sub-subframes of a subframe for downlink/uplink data communication with a wireless terminal, and the control information may indicate for each of the plurality of sub-subframes which of the sub-subframes do include sDMRS reference signals and which of the sub-subframes do not include sDMRS reference signals.

A new control information field (e.g., a new DCI field) in the PDCCH control channel and/or the SPDCCH control channel may indicate for each sub-subframe a frequency domain density of the SDMRS reference signals. Stated in other words, the new control information field may identify a distribution of the reference signals across a frequency domain of each sub-subframe including sDMRS reference signals.

According to some embodiments, an SDMRS reference signal may be scheduled for a wireless terminal in a sub-subframe sPDSCH preceding a sub-subframe sPDSCH used for data transmission to the wireless terminal. Base station processor 203 may schedule an SDMRS reference signal for a specific wireless terminal without scheduling a downlink (DL) data assignment in the same sub-subframe. This use of a preceding sub-subframe may be useful, for example, where there is a sub-subframe without a significant amount of data to transmit. In this case, base station processor 203 can use this sub-subframe for an SDMRS reference signal, and may use more resources for data transmission in the later sub-subframe(s).

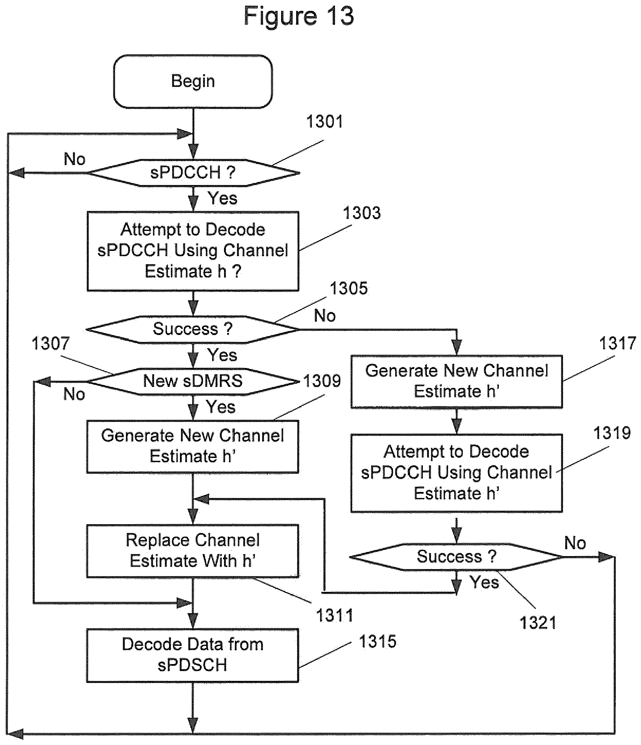

According to some embodiments illustrated in Figure 13, wireless terminal processor 303 may perform blind decoding of a special control channel sPDCCH (as discussed above with respect to Figures 6-10, and 11A-B) to determine whether a sub-subframe has been assigned for data communication. Predefined resources for sDMRS reference signals may be provided for each sub-subframe, and the sDMRS reference signals may or may not be present for that sub-subframe. If a wireless terminal processor 303 is configured to listen for transmissions on a resource where a sub-subframe can start at block 1301, the wireless terminal processor 303 attempts to blindly decode the SPDCCH control channel using its current channel estimate h at block 1303. (Optionally, if the wireless terminal has not been scheduled in the last T2 symbols, where T2 is a threshold that can be configured, the decoding will probably fail, and this operation can be skipped). If the wireless terminal processor 303 can successfully decode the control information (e.g., control information such as DCI) sent via the SPDCCH control channel (e.g., determined using a CRC check) at block 1305, the wireless terminal processor 303 can then determine whether or not it is scheduled to receive data in the respective sub-subframe sPDSCH.

According to embodiments of Figure 13, if wireless terminal processor 303 successfully decodes the control information sent via control channel sPDCCH using the current channel estimate h at block 1305 (i.e., the control channel sPDCCH is scrambled using the individual identification, e.g., C-RNTI, for the wireless terminal, and the CRC check passes), data is scheduled for transmission to the wireless terminal during the corresponding sub-subframe sPDSCH. Wireless terminal processor 303 may thus determine at block 1307 if the assigned sub-subframe sPDSCH includes new sDMRS reference signals. If the assigned sub-subframe sPDSCH includes new sDMRS reference signals at block 1307, processor 303 may generate a new channel estimate h' at block 1309, replace the current channel estimate with the new channel estimate h' at block 1311, and decode data from the assigned sub-subframe at block 1315.

If wireless terminal processor 303 does not successfully decode the control information sent via control channel sPDCCH at block 1305 (i.e., the CRC check fails), the control channel sPDCCH may have been intended for another wireless terminal (i.e., the control channel may be scrambled using an individual identification C-RNTI for another wireless terminal), or the channel estimate used by processor 303 may no longer be sufficiently accurate due to changes in channel conditions or the precoding matrix. Accordingly, wireless terminal processor 303 may generate a new channel estimate h' at block 1317 based on sDMRS reference signals assumed to be included in the sub-subframe associated with the control channel sPDCCH. At block 1319, processor 303 may again attempt to decode the control channel sPDCCH using the new channel estimate h'. If this decoding is successful at block 1321 (i.e., the CRC check now passes), the corresponding sub-subframe sPDSCH is scheduled for data communication with the wireless terminal, and processor 303 will proceed to replace the previous channel estimate h with the new channel estimate h' at block 1311, and processor 1315 will decode data from the assigned sub-subframe at block 1315.

If the decoding fails using the new channel estimate h' at block 1321 (i.e., the CRC check fails), wireless terminal processor 303 assumes that it is not scheduled in the current sub-subframe, discards the new channel estimate h', and maintains the current channel estimate h. (This may enable the base station to schedule a different wireless terminal for a small number of sub-subframes, and then go back to the old wireless terminal without the need for a new sDMRS).

Operations of Figure 13 may be repeated for each control channel sPDCCH of a subframe for which the wireless terminal is configured. If for a given control channel sPDCCH, the wireless terminal replaces the current channel estimate h with a new channel estimate h' at block 1311, the new channel estimate h' becomes the current channel estimate h for the next iteration of block 1303.

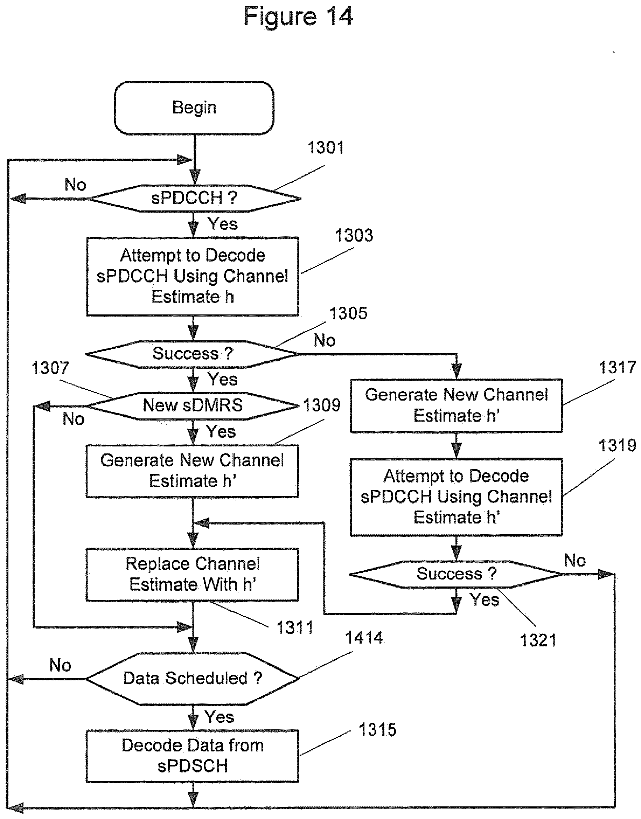

Operations of Figure 14 are the same as those of Figure 13 with the addition of decision block 1414. Accordingly, Figure 14 allows for the possibility that an SDMRS reference signal may be scheduled for a wireless terminal in a sub-subframe sPDSCH preceding a sub-subframe sPDSCH used for data transmission to the wireless terminal. Base station processor 203 may schedule an SDMRS reference signal for a specific wireless terminal without scheduling a downlink (DL) data assignment in the same sub-subframe. Accordingly, operations of blocks 1303, 1305, 1307, 1309, 1311, 1317, 1319, and 1321 may be performed for sub-subframes including data so that the data is decoded at blocks 1414 and 1315, and for sub-subframes including sDMRS reference signals so that data is not decoded at block 1414.

According to embodiments of Figures 13 and 14, wireless terminal processor 303 may recursively average its channel estimate over a subframe boundary as long as the control channel sPDCCH CRC checks, leading to better channel estimates. The base station can force the wireless terminal UE to reset its channel estimate either by changing the precoding matrix, and thus forcing a CRC fail, or by providing an indicator in the control channel sPDCCH to indicate that sDMRS reference signals are included in the assigned sub-subframe.

Figure 15A illustrates frequency and time resource allocations for a group of wireless terminals including wireless terminals UE1 and UE2 over one subframe according to embodiments discussed above with respect to Figures 6-10. Slow control information (e.g., scrambled using a group identification such as a group RNTI) may be provided using control channel PDCCH, for example, to assign a frequency resource including subcarriers SC1 to SC12 to the group of wireless terminals for data communication during the subframe, and fast control information (scrambled using an individual identification such as an individual C-RNTI) may be provided using control channels sPDCCH to assign respective sub-subframes sPDSCH to the wireless terminals. According to the example of Figure 15A, fast control information of control channels sPDCCH1, sPDCCH3, sPDCCH4, sPDCCH5, and sPDCCH6 may assign respective sub-subframes sPDSCH1, sPDSCH3, sPDSCH4, sPDSCH5, and sPDSCH6 for data communication with wireless terminal UE1. Fast control information of control channel sPDCCH2 may assign respective sub-subframe sPDSCH2 for data communication with wireless terminal 2.

Figure 15B is a diagram illustrating the six sub-subframes of Figure 15A and a distribution of sDMRS reference signals (illustrated in solid black). As shown, sDMRS reference signals may be included in sub-subframe sPDSCH1 which is the first sub-subframe assigned to wireless terminal UE1, and sDMRS reference signals may be included sub-subframe sPDSCH2 which is the first sub-subframe assigned to wireless terminal UE2. In addition, sDMRS reference signals may be included in sub-subframe sPDSCH5 which is assigned to wireless terminal UE1. Accordingly, fast control information of control channels sPDCCH1, sPDCCH2, and sPDCCH5 may include indications that the respective sub-subframes include sDMRS reference signals.

According to embodiments illustrated in Figures 15A and 15B, sDMRS reference signals may be omitted from sub-subframes sPDSCH3, sPDSCH4, and sPDSCH6, to increase capacity for data communication. For example, the base station may be configured to provide sDMRS reference signals in a first sub-subframe transmitted to a wireless terminal in a subframe (e.g., in sub-subframe sPDSCH1 for wireless terminal UE1, and in sub-subframe sPDSCH2 for wireless terminal UE2). The base station may also be configured to provide sDMRS reference signals in a sub-subframe if more than a threshold time (e.g., 0.5 ms) has passed since sDMRS reference symbols were provided for that wireless terminal. In the example of Figures 15A and 15B, the channel estimate based on sDMRS reference signals of sub-subframe sPDSCH1 may be sufficient to decode sub-subframes sPDSCH1, sPDSCH3, and sPDSCH4, but sDMRS reference signals may be provided in sub-subframe sPDSCH5 for a new channel estimate because more than 0.5 ms have passed since the last sDMRS reference signals for wireless terminal UE1.

According to some embodiments of inventive concepts, reference signal overhead may be reduced by not transmitting reference signals in every sub-subframe. Accordingly, a first wireless terminal may reuse channel estimates from an earlier sub-subframe even if there is a gap in sub-subframes scheduled for the first wireless terminal (e.g., wireless terminal UE1 reuses channel estimates from sub-subframe sPDSCH1 for sub-subframe sPDSCH3 in Figures 15A-B), thereby allowing scheduling of other wireless terminals (e.g., wireless terminal UE2 in sub-subframe sPDSCH2 in Figures 15A-B) without the need to retransmit reference signals to the first wireless terminal. In addition, blind decoding of fast control information transmitted using control channel sPDCCH may be performed by a wireless terminal to determine whether sDMRS reference signals are included in the associated sub-subframe, and this may also enable averaging of channel estimates across subframe boundaries.

Figure 16 is a flow chart illustrating operations of a base station BS (also referred to as a network node) processor 203 according to some embodiments of inventive concepts. For a new subframe at block 1601, processor 203 may transmit control information PDCCH (also referred to as slow control information) through transceiver 201 at block 1603 as shown in Figure 15A. Control information PDCCH may identify a distribution of reference signals sDMRS across a frequency domain of subsequent sub-subframes sPDSCH1, sPDSCH2, sPDSCH3, sPDSCH4, sPDSCH5, and sPDSCH6; and/or control information PDCCH may include a frequency resource assignment for a group of sub-subframes (e.g., an assignment of subcarriers SC1 to SC12 for sub-subframes sPDSCH1 to sPDSCH6) within the subframe.

At block 1605, processor 203 may transmit control information sPDCCH1 (also referred to as fast control information) through transceiver 201 to first wireless terminal UE1, and control information sPDCCH1 may assign sub-subframe sPDSCH1 to first wireless terminal UE1. At block 1607, processor 203 may transmit sub-subframe sPDSCH1 including reference signals sDMRS through transceiver 201 to wireless terminal UE1. According to some embodiments, sub-subframe sPDSCH1 may include reference signals sDMRS and downlink data for wireless terminal UE1. Moreover, as shown in Figure 15A, transmission of corresponding control information sPDCCH1 and sub-subframe sPDSCH1 may begin at the same time and/or may be overlapping in time.

At block 1609, processor 203 may receive ACK/NACK feedback from wireless terminal UE1 through transceiver 201 for the downlink data of sub-subframe sPDSCH1. While block 1609 is shown before transmitting a next sub-subframe/subframe for ease of illustration, the ACK/NACK feedback for one sub-subframe may be received after transmitting a next sub-subframe/subframe according to some embodiments. Operations of blocks 1605, 1607, and 1609 may be repeated for each sub-subframe of the frequency resource assignment in the subframe until the subframe is complete at block 1611.

At block 1605, processor 203 may then transmit control information sPDCCH2 (also referred to as fast control information) through transceiver 201 to wireless terminal UE2, and control information sPDCCH2 may assign sub-subframe sPDSCH2 to wireless terminal UE2. At block 1607, processor 203 may transmit sub-subframe sPDSCH2 including reference signals sDMRS through transceiver 201 to wireless terminal UE2. According to some embodiments, sub-subframe sPDSCH2 may include reference signals sDMRS and downlink data for wireless terminal UE2. Moreover, as shown in Figure 15A, transmission of corresponding control information sPDCCH1 and sub-subframe sPDSCH1 may begin at the same time and/or may be overlapping in time.

At block 1609, processor 203 may receive ACK/NACK feedback from wireless terminal UE2 through transceiver 201 for the downlink data of sub-subframe sPDSCH2. While block 1609 is shown before transmitting a next sub-subframe/subframe for ease of illustration, the ACK/NACK feedback for one sub-subframe may be received after transmitting a next sub-subframe/subframe according to some embodiments. Operations of blocks 1605, 1607, and 1609 may then be repeated for a next sub-subframe (e.g., sPDSCH3) of the frequency resource assignment at block 1611.

At block 1605, processor 203 may then transmit control information sPDCCH3 (also referred to as fast control information) through transceiver 201 to t wireless terminal UE1, and control information sPDCCH3 may assign sub-subframe sPDSCH3 to wireless terminal UE1. At block 1607, processor 203 may transmit sub-subframe sPDSCH3 (without reference signals) through transceiver 201 to wireless terminal UE1. According to some embodiments, sub-subframe sPDSCH3 may include downlink data for wireless terminal UE1. Moreover, as shown in Figure 15A, transmission of corresponding control information sPDCCH3 and sub-subframe sPDSCH3 may begin at the same time and/or may be overlapping in time.

At block 1609, processor 203 may receive ACK/NACK feedback from wireless terminal UE1 through transceiver 201 for the downlink data of sub-subframe sPDSCH3. While block 1609 is shown before transmitting a next sub-subframe/subframe for ease of illustration, the ACK/NACK feedback for one sub-subframe may be received after transmitting a next sub-subframe/subframe according to some embodiments. Operations of blocks 1605, 1607, and 1609 may then be repeated for a next sub-subframe (e.g., sPDSCH4) of the frequency resource assignment at block 1611.

At block 1605, processor 203 may then transmit control information sPDCCH4 (also referred to as fast control information) through transceiver 201 to wireless terminal UE1, and control information sPDCCH4 may assign sub-subframe sPDSCH4 to wireless terminal UE1. At block 1607, processor 203 may transmit sub-subframe sPDSCH4 (without reference signals) through transceiver 201 to wireless terminal UE1. According to some embodiments, sub-subframe sPDSCH4 may include downlink data for wireless terminal UE1. Moreover, as shown in Figure 15A, transmission of corresponding control information sPDCCH4 and sub-subframe sPDSCH4 may begin at the same time and/or may be overlapping in time.

At block 1609, processor 203 may receive ACK/NACK feedback from wireless terminal UE1 through transceiver 201 for the downlink data of sub-subframe sPDSCH4. While block 1609 is shown before transmitting a next sub-subframe/subframe for ease of illustration, the ACK/NACK feedback for one sub-subframe may be received after transmitting a next sub-subframe/subframe according to some embodiments. Operations of blocks 1605, 1607, and 1609 may then be repeated for a next sub-subframe (e.g., sPDSCH5) of the frequency resource assignment at block 1611.

At block 1605, processor 203 may then transmit control information sPDCCH5 (also referred to as fast control information) through transceiver 201 to wireless terminal UE1, and control information sPDCCH5 may assign sub-subframe sPDSCH5 to wireless terminal UE1. At block 1607, processor 203 may transmit sub-subframe sPDSCH5 with reference signals through transceiver 201 to wireless terminal UE1. According to some embodiments, sub-subframe sPDSCH5 may include reference signals sDMRS and downlink data for wireless terminal UE1. Moreover, as shown in Figure 15A, transmission of corresponding control information sPDCCH5 and sub-subframe sPDSCH5 may begin at the same time and/or may be overlapping in time.

At block 1609, processor 203 may receive ACK/NACK feedback from wireless terminal UE1 through transceiver 201 for the downlink data of sub-subframe sPDSCH5. While block 1609 is shown before transmitting a next sub-subframe/subframe for ease of illustration, the ACK/NACK feedback for one sub-subframe may be received after transmitting a next sub-subframe/subframe according to some embodiments. Operations of blocks 1605, 1607, and 1609 may then be repeated for a next sub-subframe (e.g., sPDSCH6) of the frequency resource assignment at block 1611.

At block 1605, processor 203 may then transmit control information sPDCCH6 (also referred to as fast control information) through transceiver 201 to first wireless terminal UE1, and control information sPDCCH6 may assign sub-subframe sPDSCH6 to first wireless terminal UE1. At block 1607, processor 203 may transmit sub-subframe sPDSCH6 (without reference signals) through transceiver 201 to wireless terminal UE1. According to some embodiments, sub-subframe sPDSCH6 may include downlink data for wireless terminal UE1. Moreover, as shown in Figure 15A, transmission of corresponding control information sPDCCH6 and sub-subframe sPDSCH6 may begin at the same time and/or may be overlapping in time.

At block 1609, processor 203 may receive ACK/NACK feedback from wireless terminal UE1 through transceiver 201 for the downlink data of sub-subframe sPDSCH6. While block 1609 is shown before transmitting a next sub-subframe/subframe for ease of illustration, the ACK/NACK feedback for one sub-subframe may be received after transmitting a next sub-subframe/subframe according to some embodiments. Because the subframe of Figure 15A is now complete at block 1611, processor 203 may return to block 1601 for a next subframe. In a next subframe, different time and/or frequency allocations may be provided for one or more groups of sub-subframes.

Figure 17 is a flow chart illustrating operations of a wireless terminal UE1 processor 303 according to some embodiments of inventive concepts. For a new subframe at block 1701, processor 303 may receive control information PDCCH (also referred to as slow control information) through transceiver 301 at block 1703 as shown in Figure 15A. Control information PDCCH may identify a distribution of reference signals sDMRS across a frequency domain of subsequent sub-subframes sPDSCH1, sPDSCH2, sPDSCH3, sPDSCH4, sPDSCH5, and sPDSCH6; and/or control information PDCCH may include a frequency resource assignment for a group of sub-subframes (e.g., an assignment of subcarriers SC1 to SC12 for sub-subframes sPDSCH1 to sPDSCH6) within the subframe.

At block 1705, processor 303 may receive control information sPDCCH1 (also referred to as fast control information) through transceiver 301 from base station BS, and control information sPDCCH1 may assign sub-subframe sPDSCH1 to first wireless terminal UE1. At block 1705a, processor 303 may determine whether sub-subframe sPDSCH1 includes reference signals, for example, based on control information PDCCH and/or sPDCCH1. If sub-subframe sPDSCH1 includes reference signals as shown in Figure 15B, processor 303 may generate a channel estimate based on the reference signals sDMRS of sub-subframe sPDSCH1 at block 1706, and processor 303 may receive sub-subframe sPDSCH1 (including downlink data) by decoding sub-subframe sPDSCH1 using the channel estimate based on the reference signals sDMRS of the sub-subframe sPDSCH1. If the sub-subframe does not include reference signals at block 1706a (e.g., sub-subframes sPDSCH3, sPDSCH4, and sPDSCH6), processor 303 may receive the sub-subframe using a previously generated channel estimate from a previous sub-subframe.

At block 1709, processor 303 may transmit ACK/NACK feedback through transceiver 301 for the downlink data of sub-subframe sPDSCH1. While block 1709 is shown before receiving a next sub-subframe/subframe for ease of illustration, the ACK/NACK feedback for one sub-subframe may be transmitted after receiving a next sub-subframe/subframe according to some embodiments. Operations of blocks 1705, 1706a, 1706b, 1707, and 1709 may be repeated for each sub-subframe of the frequency resource assignment that is assigned to wireless terminal UE1 until the subframe is complete at block 1711.

Because sub-subframe sPDSCH2 is not assigned to wireless terminal UE1, wireless terminal UE1 may take no action with respect to sub-subframe sPDSCH2.

At block 1705, processor 303 may receive control information sPDCCH3 (also referred to as fast control information) through transceiver 301 from base station BS, and control information sPDCCH3 may assign sub-subframe sPDSCH3 to first wireless terminal UE1. At block 1705a, processor 303 may determine whether sub-subframe sPDSCH3 includes reference signals, for example, based on control information PDCCH and/or sPDCCH3. Because sub-subframe sPDSCH3 does not include reference signals as shown in Figure 15B, processor 303 may receive sub-subframe sPDSCH3 at block 1707 using the channel estimate based on the reference signals sDMRS of sub-subframe sPDSCH1.

At block 1709, processor 303 may transmit ACK/NACK feedback through transceiver 301 for the downlink data of sub-subframe sPDSCH3. While block 1709 is shown before receiving a next sub-subframe/subframe for ease of illustration, the ACK/NACK feedback for one sub-subframe may be transmitted after receiving a next sub-subframe/subframe according to some embodiments. Operations of blocks 1705, 1706a, 1706b, 1707, and 1709 may be repeated for a next sub-subframe sPDSCH4 that is assigned to wireless terminal UE1 at block 1711.

At block 1705, processor 303 may receive control information sPDCCH4 (also referred to as fast control information) through transceiver 301 from base station BS, and control information sPDCCH4 may assign sub-subframe sPDSCH4 to first wireless terminal UE1. At block 1705a, processor 303 may determine whether sub-subframe sPDSCH4 includes reference signals, for example, based on control information PDCCH and/or sPDCCH4. Because sub-subframe sPDSCH4 does not include reference signals as shown in Figure 15B, processor 303 may receive sub-subframe sPDSCH4 at block 1707 using the channel estimate based on the reference signals sDMRS of sub-subframe sPDSCH1.

At block 1709, processor 303 may transmit ACK/NACK feedback through transceiver 301 for the downlink data of sub-subframe sPDSCH4. While block 1709 is shown before receiving a next sub-subframe/subframe for ease of illustration, the ACK/NACK feedback for one sub-subframe may be transmitted after receiving a next sub-subframe/subframe according to some embodiments. Operations of blocks 1705, 1706a, 1706b, 1707, and 1709 may be repeated for a next sub-subframe sPDSCH5 that is assigned to wireless terminal UE1 at block 1711.

At block 1705, processor 303 may receive control information sPDCCH5 (also referred to as fast control information) through transceiver 301 from base station BS, and control information sPDCCH5 may assign sub-subframe sPDSCH5 to first wireless terminal UE1. At block 1705a, processor 303 may determine whether sub-subframe sPDSCH5 includes reference signals, for example, based on control information PDCCH and/or sPDCCH5. Because sub-subframe sPDSCH5 includes reference signals as shown in Figure 15B, processor 303 may generate a channel estimate based on the reference signals sDMRS of sub-subframe sPDSCH5 at block 1706, and processor 303 may receive sub-subframe sPDSCH5 (including downlink data) by decoding sub-subframe sPDSCH5 using the channel estimate based on the reference signals sDMRS of the sub-subframe sPDSCH5.

At block 1709, processor 303 may transmit ACK/NACK feedback through transceiver 301 for the downlink data of sub-subframe sPDSCH5. While block 1709 is shown before receiving a next sub-subframe/subframe for ease of illustration, the ACK/NACK feedback for one sub-subframe may be transmitted after receiving a next sub-subframe/subframe according to some embodiments. Operations of blocks 1705, 1706a, 1706b, 1707, and 1709 may be repeated for a next sub-subframe sPDSCH6 that is assigned to wireless terminal UE1 at block 1711.

At block 1705, processor 303 may receive control information sPDCCH6 (also referred to as fast control information) through transceiver 301 from base station BS, and control information sPDCCH6 may assign sub-subframe sPDSCH6 to wireless terminal UE1. At block 1705a, processor 303 may determine whether sub-subframe sPDSCH6 includes reference signals, for example, based on control information PDCCH and/or sPDCCH6. Because sub-subframe sPDSCH6 does not include reference signals as shown in Figure 15B, processor 303 may receive sub-subframe sPDSCH6 at block 1707 using the channel estimate based on the reference signals sDMRS of sub-subframe sPDSCH5.

At block 1709, processor 303 may transmit ACK/NACK feedback through transceiver 301 for the downlink data of sub-subframe sPDSCH6. While block 1709 is shown before receiving a next sub-subframe/subframe for ease of illustration, the ACK/NACK feedback for one sub-subframe may be transmitted after receiving a next sub-subframe/subframe according to some embodiments. Because the subframe of Figure 15A is now complete at block 1711, processor 303 may return to block 1701 for a next subframe. In a next subframe, different time and/or frequency allocations may be provided for one or more groups of sub-subframes.

ABBREVIATIONS

| | |
|---|---|
| ACK | Acknowledgement |
| ARQ | Automatic Repeat reQuest |
| C-RNTI | Cell Radio Network Temporary Identity |
| CRC | Cyclic Redundancy Check |
| CP | Cyclic Prefix |
| DL | Downlink |
| DCI | Downlink Control Information |
| DRX | Discontinuous Reception |
| DTX | Discontinuous Transmission |
| HARQ | Hybrid Automatic Repeat reQuest |
| LTE | Long Term Evolution |
| NDI | New Data Indication |
| MCS | Modulation and Coding Scheme |
| OFDM | Orthogonal Frequency Division Multiple Access |
| PCFICH | Physical Control Format Indicator Channel |

| PDCCH | Physical Downlink Control Channel |
| PDSCH | Physical Downlink Shared Channel |
| PHICH | Physical HARQ Indication Channel |
| PUCCH | Physical Uplink Control Channel |
| PUSCH | Physical Uplink Shared Channel |
| PRB | Physical Resource Block |
| RLC | Radio Link Control |
| RRC | Radio Resource Control |
| RAT | Radio Access Technology |
| RA | Resource Allocation |
| RBG | Resource Block Group |
| RNTI | Radio Network Temporary Identifier |
| RTT | Round Trip Time |
| RV | Redundancy Version |
| SC-FDMA | Single Carrier- Frequency Division Multiple Access |
| SSF | Sub-SubFrame |
| TDD | Time Domain Division |
| TDS | Time Domain Split |
| TTI | Transmission Time Interval |

Further Definitions:

When an element is referred to as being "connected", "coupled", "responsive", or variants thereof to another element, it can be directly connected, coupled, or responsive to the other element or one or more intervening elements may be present. In contrast, when an element is referred to as being "directly connected", "directly coupled", "directly responsive", or variants thereof to another element, there are no intervening elements present. Like numbers refer to like nodes/elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or", abbreviated "/", includes any and all combinations of one or more of the associated listed items.

As used herein, the terms "comprise", "comprising", "comprises", "include", "including", "includes", "have", "has", "having", or variants thereof are open-ended, and include one or more stated features, integers, nodes, steps, components or functions but do not preclude the presence or addition of one or more other features, integers, nodes, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. Examples of embodiments of aspects of present inventive concepts explained and illustrated herein include their complimentary counterparts. The same reference numerals or the same reference designators denote the same or similar elements throughout the specification.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit (also referred to as a processor) of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows. Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them.

Other network elements, communication devices and/or methods according to embodiments of inventive concepts will be or become apparent to one with skill in the art upon review of the present drawings and description. The scope of the invention is exclusively limited by the appended claims.

## Claims

1. A method of operating a network node in a radio access network, RAN, the method comprising:

   transmitting (1607) a first sub-subframe of a sub-frame, wherein a sub-subframe is a subset of consecutive Orthogonal Frequency Division Multiplexing, OFDM, symbols within a subframe defining a unit for the assignment of a short Physical Downlink Shared Channel, PDSCH, of shorter duration than the full subframe, and wherein the first sub-subframe includes user specific demodulation reference signals for a wireless terminal (UE1);
   transmitting (1603) control information to the wireless terminal (UE1) before completion of the first sub-subframe, wherein the control information includes an indication that a second sub-subframe is free of user specific demodulation reference signals; and
   after transmitting the first sub-subframe, transmitting (1607) the second sub-subframe of the subframe, wherein the second sub-subframe includes downlink data for the wireless terminal (UE1), and wherein the second sub-subframe is free of user specific demodulation reference signals.

2. The method of Claim 1 wherein the first sub-subframe is free of downlink data for the wireless terminal (UE1).

3. The method of any of Claims 1-2, wherein there is a gap between the first and second sub-subframes.

4. The method of any of Claims 1-3, wherein the wireless terminal (UE1) is a first wireless terminal (UE1), the method further comprising:
   after transmitting the first sub-subframe and before transmitting the second sub-subframe, transmitting (1607) a third sub-subframe of the subframe, wherein the third sub-subframe includes user specific demodulation reference signals and/or downlink data for a second wireless terminal (UE2).

5. The method of Claim 4 wherein transmitting the first sub-subframe comprises transmitting the first sub-subframe using a frequency resource, wherein transmitting the second sub-subframe comprises transmitting the second sub-subframe using the frequency resource, and wherein transmitting the third sub-subframe comprises transmitting the third sub-subframe using the frequency resource.

6. A method of operating a wireless terminal (UE1) in communication with a radio access network, the method comprising:

   receiving (1707) a first sub-subframe of a sub-frame from a base station, BS, wherein a sub-subframe is a subset of consecutive Orthogonal Frequency Division Multiplexing, OFDM, symbols within a subframe defining a unit for the assignment of a short Physical Downlink Shared Channel, PDSCH, of shorter duration than the full subframe, and wherein the first sub-subframe includes user specific demodulation reference signals for the wireless terminal (UE1);

receiving (1705) control information from the base station before completion of the first sub-subframe, wherein the control information includes an indication that a second sub-subframe is free of the user specific demodulation reference signals;

generating (1706b) a channel estimate based on the user specific demodulation reference signals of the first sub-subframe; and

after receiving the first sub-subframe, receiving (1707) the second sub-subframe of the sub-frame from the base station, wherein the second sub-subframe is free of user specific demodulation reference signals,

wherein receiving (1707) the second sub-subframe comprises decoding the second sub-subframe using the channel estimate based on the user specific demodulation reference signals of the first sub-subframe.

7. The method of Claim 6 wherein the first sub-subframe includes first downlink data for the wireless terminal (UE1) and wherein the second sub-subframe includes second downlink data for the wireless terminal (UE1).

8. The method of Claim 7 wherein receiving the first sub-subframe comprises decoding the first downlink data using the channel estimate.

9. The method of Claim 6 wherein the first sub-subframe is free of downlink data for the wireless terminal (UE1).

10. The method of any of Claims 6-9, wherein there is a gap between the first and second sub-subframes.

11. The method of any of Claims 6-10 wherein receiving the first sub-subframe comprises receiving the first sub-subframe using a frequency resource, and wherein receiving the second sub-subframe comprises receiving the second sub-subframe using the frequency resource.

12. The method of any of Claims 6-11 further comprising:

receiving (1705) first control information from the base station, wherein the first control information assigns the first sub-subframe to the wireless terminal (UE1); and

after receiving the first control information, receiving (1705) second control information from the base station, wherein the second control information assigns the second sub-subframe to the wireless terminal (UE1).

13. The method of any of Claims 6-12 further comprising: after receiving the second sub-subframe, receiving (1707) a third sub-subframe of the subframe from the base station, wherein the third sub-subframe includes user specific demodulation reference signals and downlink data for the wireless terminal (UE1).

14. A network node of a radio access network, RAN, wherein the network node is adapted to:

transmit a first sub-subframe of a subframe, wherein a sub-subframe is a subset of consecutive Orthogonal Frequency Division Multiplexing, OFDM, symbols within a subframe defining a unit for the assignment of a short Physical Downlink Shared Channel, PDSCH, of shorter duration than the full subframe, and wherein the first sub-subframe includes user specific demodulation reference signals for a wireless terminal (UE1);

transmit (1603) control information to the wireless terminal (UE1) before completion of the first sub-subframe, wherein the control information includes an indication that a second sub-subframe is free of user specific demodulation reference signals; and

transmit the second sub-subframe of the subframe after transmitting the first sub-subframe, wherein the second sub-subframe includes downlink data for the wireless terminal (UE1), and wherein the second sub-subframe is free of user specific demodulation reference signals.

15. A wireless terminal (UE1) adapted to:

receive a first sub-subframe of a subframe from a base station, BS, wherein a sub-subframe is a subset of consecutive Orthogonal Frequency Division Multiplexing, OFDM, symbols within a subframe defining a unit for the assignment of a short Physical Downlink Shared Channel, PDSCH, of shorter duration than the full subframe, and wherein the first sub-subframe includes user specific demodulation reference signals for the wireless terminal (UE1);

receive control information from the base station before completion of the first sub-subframe, wherein the control information includes an indication that a second sub-subframe is free of the user specific demodulation reference signals;

generate a channel estimate based on the user specific demodulation reference signals of the first sub-subframe; and

receive the second sub-subframe of the subframe from the base station after receiving the first sub-subframe, wherein the second sub-subframe includes downlink data for the wireless terminal (UE1), and wherein the second sub-subframe is free of user specific demodulation reference signals,
wherein reception of the second sub-subframe comprises decoding of the second sub-subframe using the channel estimate based on the user specific demodulation reference signals of the first sub-subframe.

**Patentansprüche**

1. Verfahren zum Betreiben eines Netzknotens in einem Funkzugangsnetz, RAN, wobei das Verfahren Folgendes umfasst:

   Übertragen (1607) eines ersten Unter-Unterrahmens eines Unterrahmens, wobei ein Unter-Unterrahmen eine Teilmenge von aufeinanderfolgenden orthogonalen Frequenzmultiplex-Symbolen, OFDM-Symbolen, innerhalb eines Unterrahmens ist, die eine Einheit für die Zuweisung eines kurzen physischen Downlink-Shared-Kanals, PDSCH, von kürzerer Dauer als der gesamte Unterrahmen definieren, und wobei der erste Unter-Unterrahmen benutzerspezifische Demodulationsreferenzsignale für ein drahtloses Endgerät (UE1) einschließen;
   Übertragen (1603) von Steuerinformationen an das drahtlose Endgerät (UE1) vor Beendigung des ersten Unter-Unterrahmen, wobei die Steuerinformationen eine Angabe einschließen, dass ein zweiter Unter-Unterrahmen frei von benutzerspezifischen Demodulationsreferenzsignalen ist; und
   nach dem Übertragen des ersten Unter-Unterrahmens, Übertragen (1607) des zweiten Unter-Unterrahmens des Unterrahmens, wobei der zweite Unter-Unterrahmen Downlink-Daten für das drahtlose Endgerät (UE1) einschließt, und wobei der zweite Unter-Unterrahmen frei von benutzerspezifischen Demodulationsreferenzsignalen ist.

2. Verfahren nach Anspruch 1, wobei der erste Unter-Unterrahmen frei von Downlink-Daten für das drahtlose Endgerät (UE1) ist.

3. Verfahren nach einem der Ansprüche 1 bis 2, wobei eine Lücke zwischen dem ersten und dem zweiten Unter-Unterrahmen besteht.

4. Verfahren nach einem der Ansprüche 1 bis 3, wobei das drahtlose Endgerät (UE1) ein erstes drahtloses Endgerät (UE1) ist, wobei das Verfahren ferner umfasst:
   nach dem Übertragen des ersten Unter-Unterrahmens und vor dem Übertragen des zweiten Unter-Unterrahmens, Übertragen (1607) eines dritten Unter-Unterrahmens des Unterrahmens, wobei der dritte Unter-Unterrahmen benutzerspezifische Demodulationsreferenzsignale und/oder Downlink-Daten für ein zweites drahtloses Endgerät (UE2) einschließt.

5. Verfahren nach Anspruch 4, wobei das Übertragen des ersten Unter-Unterrahmens das Übertragen des ersten Unter-Unterrahmens unter Verwendung einer Frequenzressource umfasst, wobei das Übertragen des zweiten Unter-Unterrahmens das Übertragen des zweiten Unter-Unterrahmens unter Verwendung der Frequenzressource umfasst, und wobei das Übertragen des dritten Unter-Unterrahmens das Übertragen des dritten Unter-Unterrahmens unter Verwendung der Frequenzressource umfasst.

6. Verfahren zum Betreiben eines drahtlosen Endgeräts (UE1) in Kommunikation mit einem Funkzugangsnetz, wobei das Verfahren Folgendes umfasst:

   Empfangen (1707) eines ersten Unter-Unterrahmens eines Unterrahmens von einer Basisstation, BS, wobei ein Unter-Unterrahmen eine Teilmenge von aufeinanderfolgenden orthogonalen Frequenzmultiplex-Symbolen, OFDM-Symbolen, innerhalb eines Unterrahmens ist, die eine Einheit für die Zuweisung eines kurzen physischen Downlink-Shared-Kanals, PDSCH, von kürzerer Dauer als der gesamte Unterrahmen definieren, und wobei der erste Unter-Unterrahmen benutzerspezifische Demodulationsreferenzsignale für das drahtlose Endgerät (UE1) einschließt;
   Empfangen (1705) von Steuerinformationen von der Basisstation vor Beendigung des ersten Unter-Unterrahmens, wobei die Steuerinformationen eine Angabe einschließen, dass ein zweiter Unter-Unterrahmen frei von den benutzerspezifischen Demodulationsreferenzsignalen ist;
   Erzeugen (1706b) einer Kanalschätzung basierend auf den benutzerspezifischen Demodulationsreferenzsignalen des ersten Unter-Unterrahmens; und
   nach dem Empfangen des ersten Unter-Unterrahmens, Empfangen (1707) des zweiten Unter-Unterrahmens des Unterrahmens von der Basisstation, wobei der zweite Unter-Unterrahmen frei von benutzerspezifischen Demodulationsreferenzsignalen ist,
   wobei das Empfangen (1707) des zweiten Unter-Unterrahmens das Dekodieren des zweiten Unter-Unterrahmens unter Verwendung der Kanalschätzung basierend auf den benutzerspezifischen Demodulationsreferenzsignalen des ersten Unter-Unterrahmens umfasst.

**7.** Verfahren nach Anspruch 6, wobei der erste Unter-Unterrahmen erste Downlink-Daten für das drahtlose Endgerät (UE1) einschließt, und wobei der zweite Unter-Unterrahmen zweite Downlink-Daten für das drahtlose Endgerät (UE1) einschließt.

**8.** Verfahren nach Anspruch 7, wobei das Empfangen des ersten Unter-Unterrahmens das Dekodieren der ersten Downlink-Daten unter Verwendung der Kanalschätzung umfasst.

**9.** Verfahren nach Anspruch 6, wobei der erste Unter-Unterrahmen frei von Downlink-Daten für das drahtlose Endgerät (UE1) ist.

**10.** Verfahren nach einem der Ansprüche 6 bis 9, wobei eine Lücke zwischen dem ersten und dem zweiten Unter-Unterrahmen besteht.

**11.** Verfahren nach einem der Ansprüche 6 bis 10, wobei das Empfangen des ersten Unter-Unterrahmens das Empfangen des ersten Unter-Unterrahmens unter Verwendung einer Frequenzressource umfasst, und wobei das Empfangen des zweiten Unter-Unterrahmens das Empfangen des zweiten Unter-Unterrahmens unter Verwendung der Frequenzressource umfasst.

**12.** Verfahren nach einem der Ansprüche 6 bis 11, ferner umfassend:

Empfangen (1705) einer ersten Steuerinformation von der Basisstation, wobei die erste Steuerinformation den ersten Unter-Unterrahmen dem drahtlosen Endgerät (UE1) zuweist; und nach dem Empfangen der ersten Steuerinformation Empfangen (1705) einer zweiten Steuerinformation von der Basisstation, wobei die zweite Steuerinformation den zweiten Unter-Unterrahmen dem drahtlosen Endgerät (UE1) zuweist.

**13.** Verfahren nach einem der Ansprüche 6 bis 12, ferner umfassend:
nach dem Empfangen des zweiten Unter-Unterrahmens, Empfangen (1707) eines dritten Unter-Unterrahmens des Unterrahmens von der Basisstation, wobei der dritte Unter-Unterrahmen benutzerspezifische Demodulationsreferenzsignale und Downlink-Daten für das drahtlose Endgerät (UE1) einschließt.

**14.** Netzknoten eines Funkzugangsnetzes, RAN, wobei der Netzknoten angepasst ist zum:

Übertragen eines ersten Unter-Unterrahmens eines Unterrahmens, wobei ein Unter-Unterrahmen eine Teilmenge von aufeinanderfolgenden orthogonalen Frequenzmultiplex-Symbolen, OFDM-Symbolen, innerhalb eines Unterrahmens ist, die eine Einheit für die Zuweisung eines kurzen physischen Downlink-Shared-Kanals, PDSCH, von kürzerer Dauer als der gesamte Unterrahmen definieren, und wobei der erste Unter-Unterrahmen benutzerspezifische Demodulationsreferenzsignale für ein drahtloses Endgerät (UE1) einschließen;
Übertragen (1603) von Steuerinformationen an das drahtlose Endgerät (UE1) vor Beendigung des ersten Unter-Unterrahmens, wobei die Steuerinformationen eine Angabe einschließen, dass ein zweiter Unter-Unterrahmen frei von benutzerspezifischen Demodulationsreferenzsignalen ist; und Übertragen des zweiten Unter-Unterrahmens des Unterrahmens nach Übertragen des ersten Unter-Unterrahmens, wobei der zweite Unter-Unterrahmen Downlink-Daten für das drahtlose Endgerät (UE1) einschließt, und wobei der zweite Unter-Unterrahmen frei von benutzerspezifischen Demodulationsreferenzsignalen ist.

**15.** Drahtloses Endgerät (UE1), angepasst zum:

Empfangen eines ersten Unter-Unterrahmens eines Unterrahmens von einer Basisstation, BS, wobei ein Unter-Unterrahmen eine Teilmenge von aufeinanderfolgenden orthogonalen Frequenzmultiplex-Symbolen, OFDM-Symbolen, innerhalb eines Unterrahmens ist, die eine Einheit für die Zuweisung eines kurzen physischen Downlink-Shared-Kanals, PDSCH, von kürzerer Dauer als der gesamte Unterrahmen definieren, und wobei der erste Unter-Unterrahmen benutzerspezifische Demodulationsreferenzsignale für das drahtlose Endgerät (UE1) einschließt;
Empfangen von Steuerinformationen von der Basisstation vor Beendigung des ersten Unter-Unterrahmens, wobei die Steuerinformationen eine Angabe einschließen, dass ein zweiter Unter-Unterrahmen frei von den benutzerspezifischen Demodulationsreferenzsignalen ist;
Erzeugen einer Kanalschätzung basierend auf den benutzerspezifischen Demodulationsreferenzsignalen des ersten Unter-Unterrahmens; und
Empfangen des zweiten Unter-Unterrahmens des Unterrahmens von der Basisstation nach dem Empfangen des ersten Unter-Unterrahmens, wobei der zweite Unter-Unterrahmen Downlink-Daten für das drahtlose Endgerät (UE1) einschließt, und wobei der zweite Unter-Unterrahmen frei von benutzerspezifischen Demodulationsreferenzsignalen ist,
wobei das Empfangen des zweiten Unter-Unterrahmens das Dekodieren des zweiten Unter-Unterrahmens unter Verwendung der Kanalschätzung basierend auf den benutzerspezifischen Demodulationsreferenzsignalen des ersten Unter-Unterrahmens umfasst.

## Revendications

1. Procédé de fonctionnement d'un nœud de réseau dans un réseau d'accès radio, RAN, le procédé comprenant :

   la transmission (1607) d'une première sous-sous-trame d'une sous-trame, dans lequel une sous-sous-trame est un sous-ensemble de symboles consécutifs de multiplexage par répartition orthogonale de la fréquence, OFDM, au sein d'une sous-trame définissant une unité pour l'attribution d'un court canal partagé de liaison descendante physique, PDSCH, de durée plus courte que la sous-trame complète, et dans lequel la première sous-sous-trame inclut des signaux de référence de démodulation spécifiques à l'utilisateur pour un terminal sans fil (UE1) ;
   la transmission (1603) d'informations de commande au terminal sans fil (UE1) avant achèvement de la première sous-sous-trame, dans lequel les informations de commande incluent une indication indiquant qu'une deuxième sous-sous-trame est exempte de signaux de référence de démodulation spécifiques à l'utilisateur ; et
   après transmission de la première sous-sous-trame, la transmission (1607) de la deuxième sous-sous-trame de la sous-trame, dans lequel la deuxième sous-sous-trame inclut des données de liaison descendante pour le terminal sans fil (UE1), et dans lequel la deuxième sous-sous-trame est exempte de signaux de référence de démodulation spécifiques à l'utilisateur.

2. Procédé selon la revendication 1 dans lequel la première sous-sous-trame est exempte de données de liaison descendante pour le terminal sans fil (UE1).

3. Procédé selon l'une quelconque des revendications 1 ou 2, dans lequel il y a un écart entre les première et deuxième sous-sous-trames.

4. Procédé selon l'une quelconque des revendications 1 à 3, dans lequel le terminal sans fil (UE1) est un premier terminal sans fil (UE1), le procédé comprenant en outre :
   après transmission de la première sous-sous-trame et avant transmission de la deuxième sous-sous-trame, la transmission (1607) d'une troisième sous-sous-trame de la sous-trame, dans lequel la troisième sous-sous-trame inclut des signaux de référence de démodulation spécifiques à l'utilisateur et/ou des données de liaison descendante pour un deuxième terminal sans fil (UE2).

5. Procédé selon la revendication 4 dans lequel la transmission de la première sous-sous-trame comprend la transmission de la première sous-sous-trame en utilisant une ressource de fréquence, dans lequel la transmission de la deuxième sous-sous-trame comprend la transmission de la deuxième sous-sous-trame en utilisant la ressource de fréquence, et dans lequel la transmission de la troisième sous-sous-trame comprend la transmission de la troisième sous-sous-trame en utilisant la ressource de fréquence.

6. Procédé de fonctionnement d'un terminal sans fil (UE1) en communication avec un réseau d'accès radio, le procédé comprenant :

   la réception (1707) d'une première sous-sous-trame d'une sous-trame depuis une station de base, BS, dans lequel une sous-sous-trame est un sous-ensemble de symboles consécutifs de multiplexage par répartition orthogonale de la fréquence, OFDM, au sein d'une sous-trame définissant une unité pour l'attribution d'un court canal partagé de liaison descendante physique, PDSCH, de durée plus courte que la sous-trame complète, et dans lequel la première sous-sous-trame inclut des signaux de référence de démodulation spécifiques à l'utilisateur pour le terminal sans fil (UE1) ;
   la réception (1705) d'informations de commande depuis la station de base avant achèvement de la première sous-sous-trame, dans lequel les informations de commande incluent une indication indiquant qu'une deuxième sous-sous-trame est exempte des signaux de référence de démodulation spécifiques à l'utilisateur ;
   la génération (1706b) d'une estimation de canal sur la base des signaux de référence de démodulation spécifiques à l'utilisateur de la première sous-sous-trame ; et
   après réception de la première sous-sous-trame, la réception (1707) de la deuxième sous-sous-trame de la sous-trame depuis la station de base, dans lequel la deuxième sous-sous-trame est exempte de signaux de référence de démodulation spécifiques à l'utilisateur,
   dans lequel la réception (1707) de la deuxième sous-sous-trame comprend le décodage de la deuxième sous-sous-trame en utilisant l'estimation de canal sur la base des signaux de référence de démodulation spécifiques à l'utilisateur de la première sous-sous-trame.

**7.** Procédé selon la revendication 6 dans lequel la première sous-sous-trame inclut des premières données de liaison descendante pour le terminal sans fil (UE1) et dans lequel la deuxième sous-sous-trame inclut des deuxièmes données de liaison descendante pour le terminal sans fil (UE1).

**8.** Procédé selon la revendication 7 dans lequel la réception de la première sous-sous-trame comprend le décodage des premières données de liaison descendante en utilisant l'estimation de canal.

**9.** Procédé selon la revendication 6 dans lequel la première sous-sous-trame est exempte de données de liaison descendante pour le terminal sans fil (UE1).

**10.** Procédé selon l'une quelconque des revendications 6 à 9, dans lequel il y a un écart entre les première et deuxième sous-sous-trames.

**11.** Procédé selon l'une quelconque des revendications 6 à 10 dans lequel la réception de la première sous-sous-trame comprend la réception de la première sous-sous-trame en utilisant une ressource de fréquence, et dans lequel la réception de la deuxième sous-sous-trame comprend la réception de la deuxième sous-sous-trame en utilisant la ressource de fréquence.

**12.** Procédé selon l'une quelconque des revendications 6 à 11 comprenant en outre :

la réception (1705) de premières informations de commande depuis la station de base, dans lequel les premières informations de commande attribuent la première sous-sous-trame au terminal sans fil (UE1) ; et
après réception des premières informations de commande, la réception (1705) de deuxièmes informations de commande depuis la station de base, dans lequel les deuxièmes informations de commande attribuent la deuxième sous-sous-trame au terminal sans fil (UE1).

**13.** Procédé selon l'une quelconque des revendications 6 à 12 comprenant en outre :
après réception de la deuxième sous-sous-trame, la réception (1707) d'une troisième sous-sous-trame de la sous-trame depuis la station de base, dans lequel la troisième sous-sous-trame inclut des signaux de référence de démodulation spécifiques à l'utilisateur et des données de liaison descendante pour le terminal sans fil (UE1).

**14.** Noeud de réseau d'un réseau d'accès radio, RAN, dans lequel le noeud de réseau est conçu pour :

transmettre une première sous-sous-trame d'une sous-trame, dans lequel une sous-sous-trame est un sous-ensemble de symboles consécutifs de multiplexage par répartition orthogonale de la fréquence, OFDM, au sein d'une sous-trame définissant une unité pour l'attribution d'un court canal partagé de liaison descendante physique, PDSCH, de durée plus courte que la sous-trame complète, et dans lequel la première sous-sous-trame inclut des signaux de référence de démodulation spécifiques à l'utilisateur pour un terminal sans fil (UE1) ;
transmettre (1603) des informations de commande au terminal sans fil (UE1) avant achèvement de la première sous-sous-trame, dans lequel les informations de commande incluent une indication indiquant qu'une deuxième sous-sous-trame est exempte de signaux de référence de démodulation spécifiques à l'utilisateur ; et
transmettre la deuxième sous-sous-trame de la sous-trame après transmission de la première sous-sous-trame, dans lequel la deuxième sous-sous-trame inclut des données de liaison descendante pour le terminal sans fil (UE1), et dans lequel la deuxième sous-sous-trame est exempte de signaux de référence de démodulation spécifiques à l'utilisateur.

**15.** Terminal sans fil (UE1) conçu pour :

recevoir une première sous-sous-trame d'une sous-trame depuis une station de base, BS, dans lequel une sous-sous-trame est un sous-ensemble de symboles consécutifs de multiplexage par répartition orthogonale de la fréquence, OFDM, au sein d'une sous-trame définissant une unité pour l'attribution d'un court canal partagé de liaison descendante physique, PDSCH, de durée plus courte que la sous-trame complète, et dans lequel la première sous-sous-trame inclut des signaux de référence de démodulation spécifiques à l'utilisateur pour le terminal sans fil (UE1) ;
recevoir des informations de commande depuis la station de base avant achèvement de la première sous-sous-trame, dans lequel les informations de commande incluent une indication indiquant qu'une deuxième sous-sous-trame est exempte des signaux de référence de démodulation spécifiques à l'utilisateur ;
générer une estimation de canal sur la base des signaux de référence de démodulation spécifiques à l'utilisateur de la première sous-sous-trame ; et
recevoir la deuxième sous-sous-trame de la sous-trame depuis la station de base après réception de la première sous-sous-trame, dans lequel la deuxième sous-sous-trame inclut des données de liaison descendante pour le terminal sans fil (UE1), et dans lequel la deuxième sous-sous-trame est exempte de signaux de référence de démodulation spécifiques à l'utilisateur,

dans lequel la réception de la deuxième sous-sous-trame comprend le décodage de la deuxième sous-sous-trame en utilisant l'estimation de canal sur la base des signaux de référence de démodulation spécifiques à l'utilisateur de la première sous-sous-trame.

# Figure 1

# Figure 2

# Figure 3

Wireless Terminal (UE)

Transceiver
301

Processor
303

Memory
307

# Figure 4

Core Network Node (MME)

Network
Interface
401

Processor
403

Memory
407

Figure 5
Examples of Scheduling Sub-Subframes

Figure 6

Figure 7

Figure 8

Figure 9

Figure 10

Figure 11A

2nd Freq. Resource

1st Freq. Resource

2nd Subframe

UE1
sPDSCH-4c

UE1
sPDSCH-4b

UE1
sPDSCH-4a

sPDCCH-6

sPDCCH-5

sPDCCH-4

PDCCH-2

1st Subframe

UE3
sPDSCH-3

UE2
sPDSCH-2

UE1
sPDSCH-1b

UE1
sPDSCH-1a

sPDCCH-3

sPDCCH-2

sPDCCH-1

PDCCH-1

Time Resource Allocations

System Bandwidth

Figure 11B

# Figure 12

EP 3 269 067 B1

# Figure 13

```
                    ┌──────────────┐
                    │    Begin     │
                    └──────────────┘
                           │
                           ▼            1301
     No  ◄──────────< sPDCCH ? >
                           │ Yes
                           ▼
              ┌───────────────────────┐   1303
              │  Attempt to Decode    │
              │ sPDCCH Using Channel  │
              │     Estimate h ?      │
              └───────────────────────┘
                           │            1305
                           ▼
            <────────< Success ? >──────── No ──────┐
              1307       │ Yes                       ▼
                         ▼                  ┌───────────────────┐  1317
     No  ◄──────< New sDMRS >  1309         │ Generate New Channel│
                         │ Yes              │    Estimate h'      │
                         ▼                  └───────────────────┘
              ┌───────────────────┐                  │           1319
              │ Generate New Channel│                 ▼
              │    Estimate h'      │        ┌───────────────────┐
              └───────────────────┘         │  Attempt to Decode │
                         │                   │ sPDCCH Using Channel│
                         ▼                   │    Estimate h'      │
              ┌───────────────────┐         └───────────────────┘
              │ Replace Channel   │                  │
              │ Estimate With h'  │                  ▼
              └───────────────────┘        <────< Success ? >──── No
                    1311                         1321  │ Yes
                         ▼
              ┌───────────────────┐  1315
              │ Decode Data from  │
              │      sPDSCH       │
              └───────────────────┘
```

# Figure 14

# Figure 15A

# Figure 15B

# Figure 16

Begin

New Subframe ? — No

1601

Yes

1603

Transmit PDCCH For Subframe ?

Transmit sPDCCH for Sub-Subframe — 1605

Transmit sPDSCH for Sub-Subframe — 1607

Receive ACK/NACK for Sub-Subframe — 1609

Subframe Complete ? — No

1611

Yes

# Figure 17

```
                    ┌──────────────┐
                    │    Begin     │
                    └──────┬───────┘
                           │
        ┌──────────────────┼──────────────────────────────┐
        │                  ▼                               │
   No   ╱──────────────────────────╲                       │
   ◄────┤     New Subframe ?        │                       │
        ╲──────────────────────────╱  1701                 │
                  │ Yes                                     │
                  ▼                                         │
   1703   ┌──────────────────────────┐                     │
          │    Receive PDCCH         │                     │
          │    For Subframe ?        │                     │
          └────────────┬─────────────┘                     │
                       │                                    │
        ┌──────────────┼                                    │
        │              ▼                                    │
        │     ┌──────────────────────────┐   1705          │
        │     │    Receive sPDCCH        │                 │
        │     │    for Sub-Subframe      │                 │
        │     └────────────┬─────────────┘                 │
        │                  ▼                                │
        │        ╱──────────────────────╲   1706a          │
        │   No   │   Sub-SubFrame        │                 │
        │  ◄─────┤   Includes sDMRS ?    │                 │
        │        ╲──────────────────────╱                  │
        │                │ Yes                              │
        │                ▼                                  │
        │      ┌──────────────────────────┐  1706b         │
        │      │  Generate Channel Estimate│                │
        │      └────────────┬─────────────┘                │
        │                   │                               │
        └───────────────────┤                              │
                            ▼                               │
             ┌──────────────────────────┐   1707           │
             │    Receive sPDSCH        │                   │
             │    for Sub-Subframe      │                   │
             └────────────┬─────────────┘                   │
                          ▼                                 │
             ┌──────────────────────────┐   1709           │
             │   Transmit ACK/NACK      │                   │
             │   for Sub-Subframe       │                   │
             └────────────┬─────────────┘                   │
                          ▼                                 │
   No       ╱──────────────────────────╲   1711            │
   ◄────────┤    Subframe Complete ?    │                   │
            ╲──────────────────────────╱                    │
                        │ Yes                                │
                        ▼                                    │
                        └────────────────────────────────────┘
```

**EP 3 269 067 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014110467 A